# EUROPEAN PATENT APPLICATION

(11) **EP 2 239 896 A1**
(43) Date of publication of application: **13.10.2010**
(21) Application number: 09157718.9
(22) Date of filing: 09.04.2009
(51) Int. Cl.: H04L 12/58

(54) **System and method for linking items to a group**

(30) Priority: 08.04.2009 US 420640
(71) Applicant: RESEARCH IN MOTION LIMITED, Waterloo, Ontario N2L 3W8 (CA)
(72) Inventor: Kalu, Kalu Onuka, Waterloo Ontario N2L 3W8 (CA)
(74) Representative: Roberts, Gwilym Vaughan

(57) **Abstract**

A communication device is configured to manage the sending and receiving of items and associated comments. The communication device may comprise a display screen upon which items and messages are displayed. A microprocessor configured to operate an item management application. The item management application provides an item within a peer-to-peer, serverless network of communication devices with each communication device associated with a member of a group and the group associated with the item and to provide comments, relating to the item, within the network to the communication devices due to the group being associated with the item.

## Description

### CROSS-REFERENCE TO RELATED APPLICATIONS

The present application claims priority to U.S. Patent Application No. 12/420,640; filed April 8, 2009. Said application is expressly incorporated herein by reference in its entirety.

### COPYRIGHT NOTIFICATION

A portion of the disclosure of this patent document contains material which is subject to (copyright or mask work) protection. The (copyright or mask work) owner has no objection to the facsimile reproduction by anyone of the patent document or the patent disclosure, as it appears in the Patent and Trademark Office patent file or records, but otherwise reserves all (copyright or mask work) rights whatsoever.

### FIELD

This disclosure, in a broad sense, is directed toward an electronic device that has communication capabilities. The disclosure further relates to managing the sending and receiving of an item and associated comments using communication devices with the item and comments being linked to a group.

### BACKGROUND INFORMATION

People are using communication devices to communicate with each other more and more each day. In addition to voice communication, alternative messaging systems are being used, e.g., short message services (SMS), multimedia message services (MMS), emails, and voice messages. Typically, these message services are not operating in real time (or near real time). For example, most conventional communication systems like email require polling, with a communication device checking an inbox associated with the communication device to see if a message has been received. Typically, the checking of the inbox is done on a periodic basis. To conserve the life of the battery, some communication devices extend the time between checking the inbox.

### BRIEF DESCRIPTION OF THE DRAWINGS

In order to facilitate a fuller understanding of the exemplary embodiments, reference is now made to the appended drawings. These drawings should not be construed as limiting, but are intended to be exemplary only.

Figure 1A is a front view of a handheld communication device having a reduced QWERTY keyboard and which is capable of incorporating the messaging application in accordance with an exemplary embodiment;

Figure 1B is a front view of a handheld communication device having a full QWERTY keyboard and which is capable of incorporating the messaging application in accordance with an exemplary embodiment;

Figure 2 is a block diagram representing a handheld communication device interacting in a communication network in accordance with an exemplary embodiment;

Figure 3 is a block diagram showing the relationships among the members of a group in accordance with an exemplary embodiment;

Figure 4 is a screenshot showing the group applets in accordance with an exemplary embodiment;

Figure 5 is a screenshot of the location applet for a family group in accordance with an exemplary embodiment;

Figure 6 is a screenshot of a map for the location applet in accordance with an exemplary embodiment;

Figure 7 is a screenshot of a list applet in accordance with an exemplary embodiment;

Figure 8 is a screenshot of a conversation in accordance with an exemplary embodiment;

Figure 9 is a screenshot of a photo home screen in accordance with an exemplary embodiment;

Figure 14 is a screenshot of a photo viewer in accordance with an exemplary embodiment;

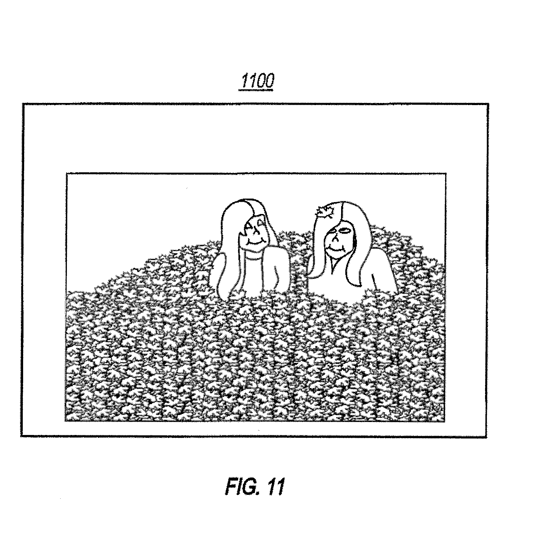

Figure 11 is a screenshot of a photo in accordance with an exemplary embodiment;

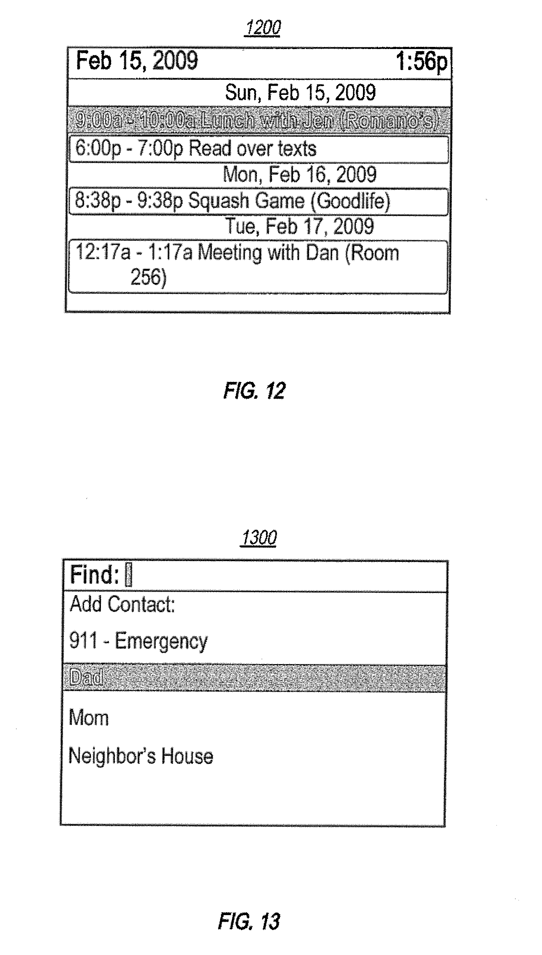

Figure 12 is a screenshot of a calendar in accordance with an exemplary embodiment;

Figure 13 is a screenshot of an address book in accordance with an exemplary embodiment;

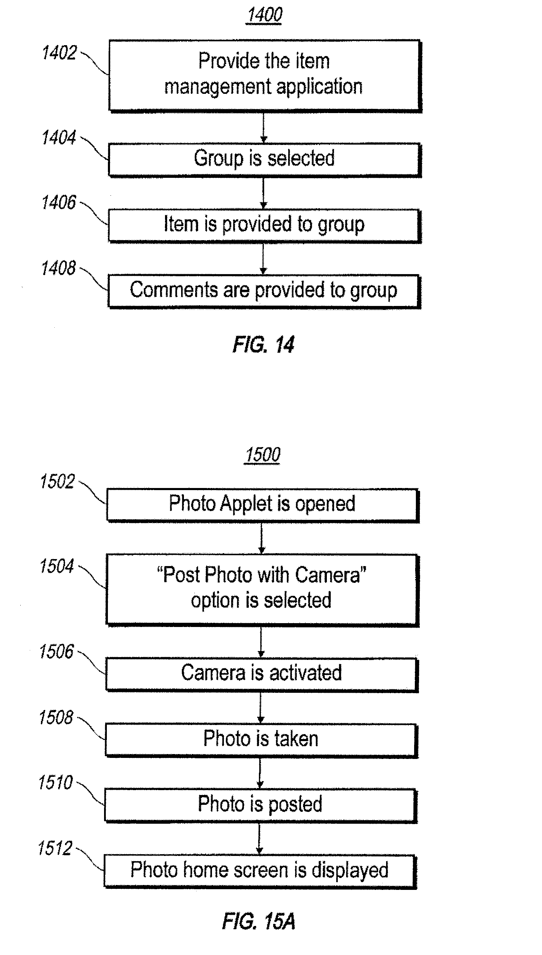

Figure 14 is a flowchart of a method for managing an item and associated comments in accordance with an exemplary embodiment;

Figure 15A is a flowchart of a method for taking a photo and sending the photo to a group in accordance with an exemplary embodiment;

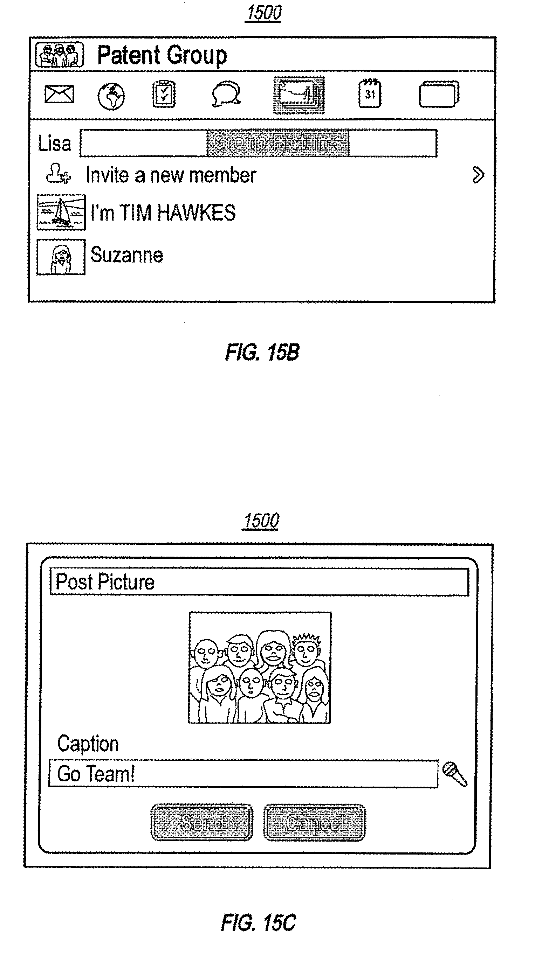

Figure 15B is a screenshot of a group home screen in accordance with an exemplary embodiment;

Figure 15C is a screenshot of a prompt to enter a caption in accordance with an exemplary embodiment;

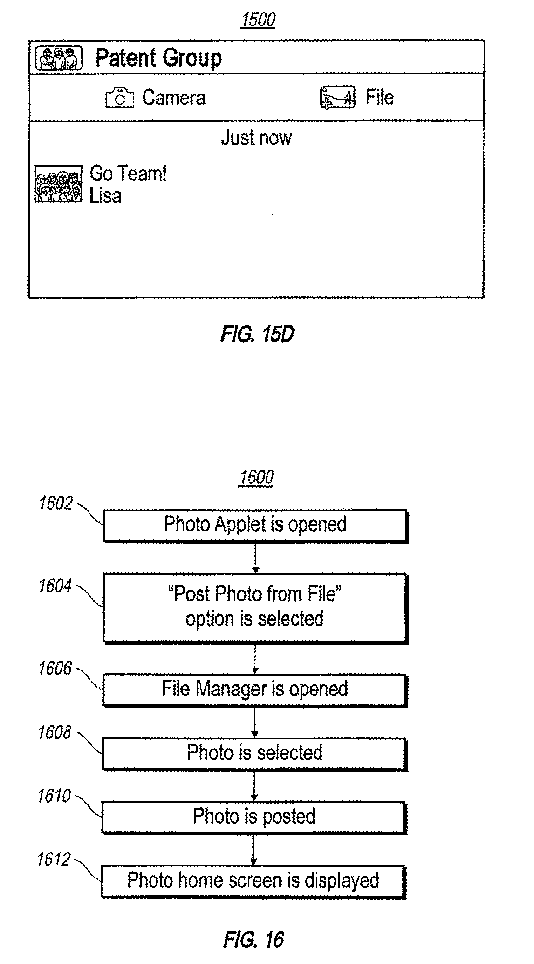

Figure 15D is a screenshot of a photo and caption in accordance with an exemplary embodiment;

Figure 16 is a flowchart of a method for sending a photo to a group in accordance with an exemplary embodiment;

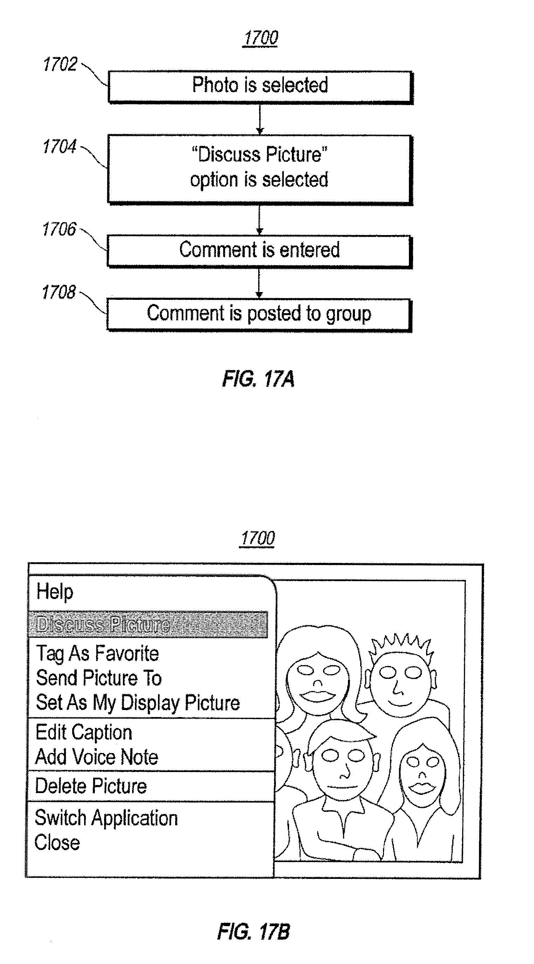

Figure 17A is a flowchart of a method for adding a comment associated with a photo and sending the comment to a group in accordance with an exemplary embodiment;

Figure 17B is a screenshot of a menu with the "Discuss Picture" option highlighted in accordance with an exemplary embodiment;

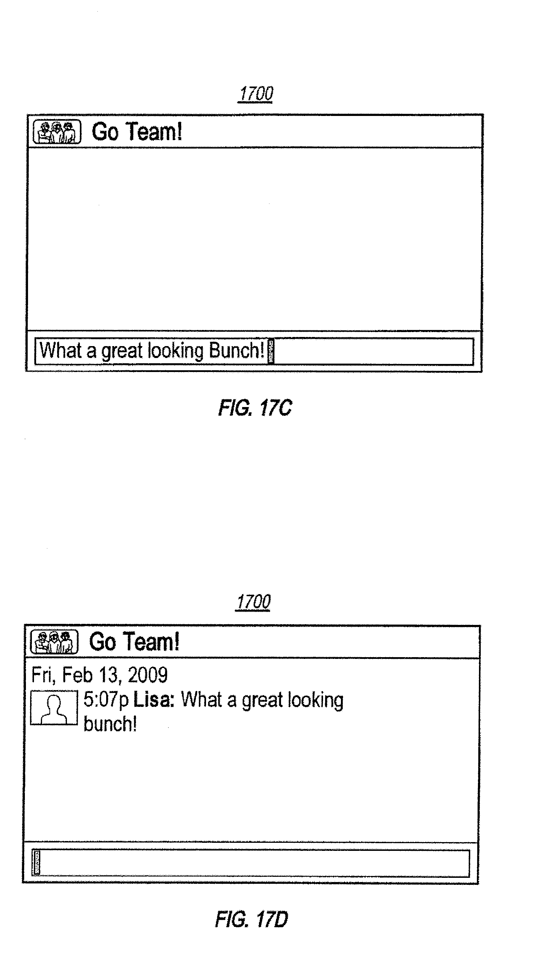

Figure 17C is a screenshot of a prompt to enter a comment in accordance with an exemplary embodiment;

Figure 17D is a screenshot of a comment being posted to the group in accordance with an exemplary embodiment;

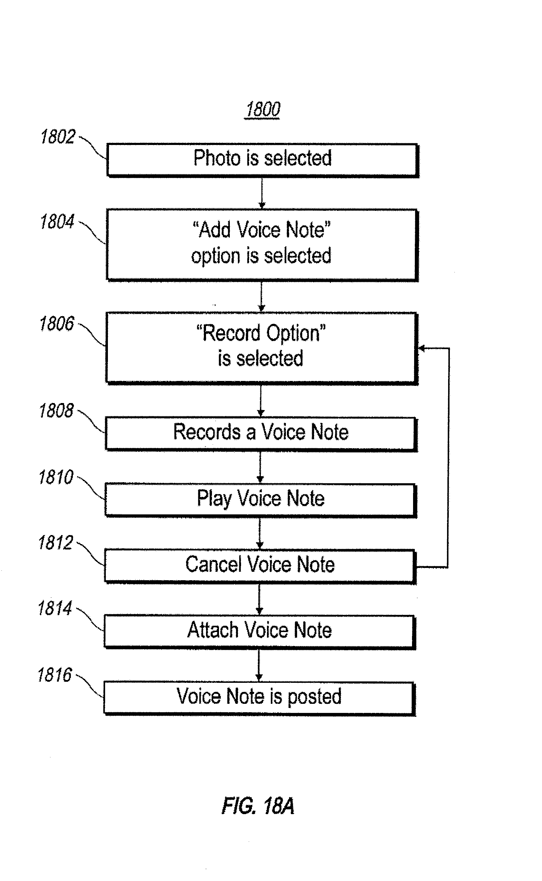

Figure 18A is a flowchart of a method for adding a voice note to a photo in accordance with an exemplary embodiment;

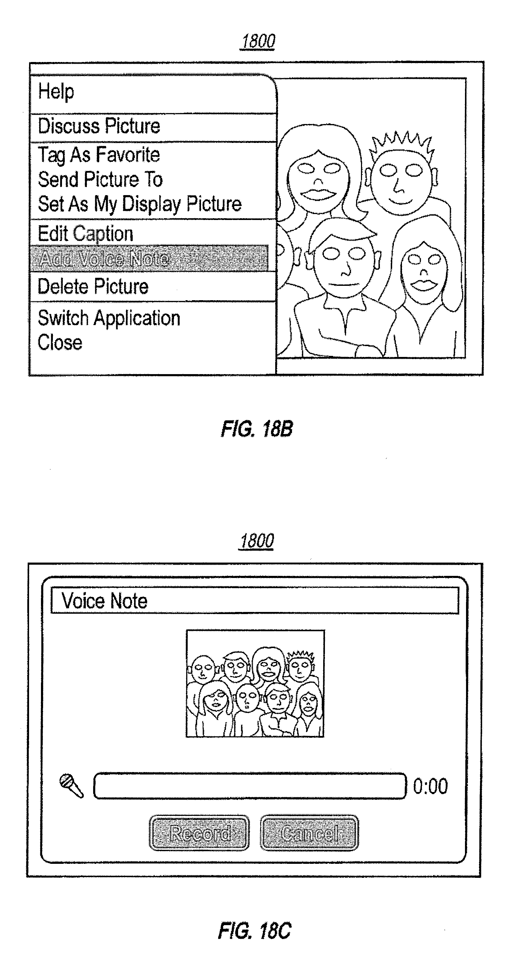

Figure 18B is a screenshot of a menu with the "Add Voice Note" option highlighted in accordance with an exemplary embodiment;

Figure 18C is a screenshot of a display for recording a voice note in accordance with an exemplary embodiment;

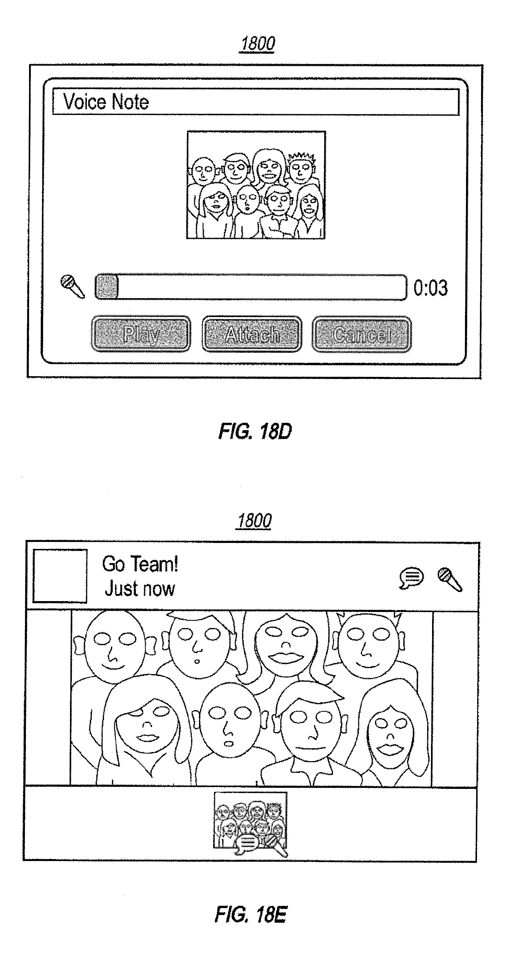

Figure 18D is a screenshot of a display for attaching a voice note in accordance with an exemplary embodiment;

Figure 18E is a screenshot of a display for a photo having recorded voice note in accordance with an exemplary embodiment;

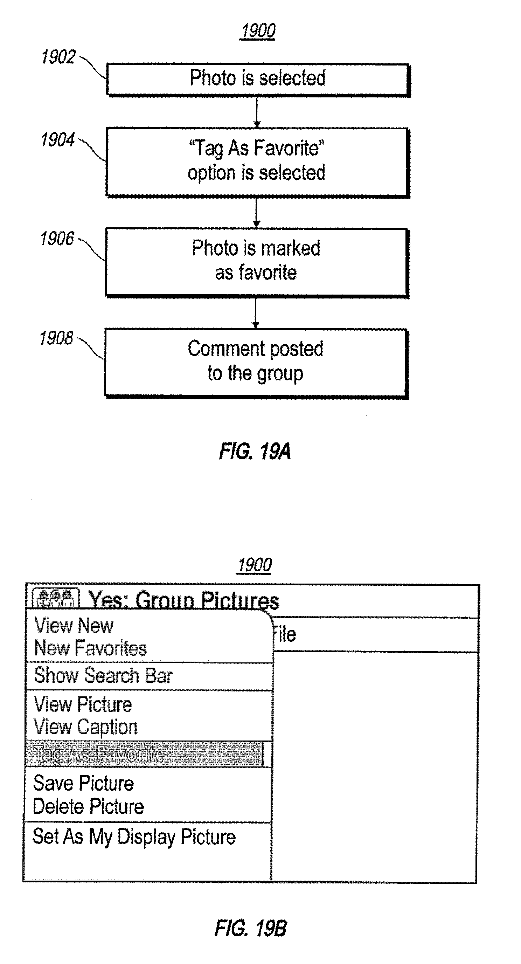

Figure 19A is a flowchart of a method for adding a photo to a favorite list in accordance with an exemplary embodiment;

Figure 19B is a screenshot of a menu with the "Tag As Favorite" option highlighted in accordance with an exemplary embodiment;

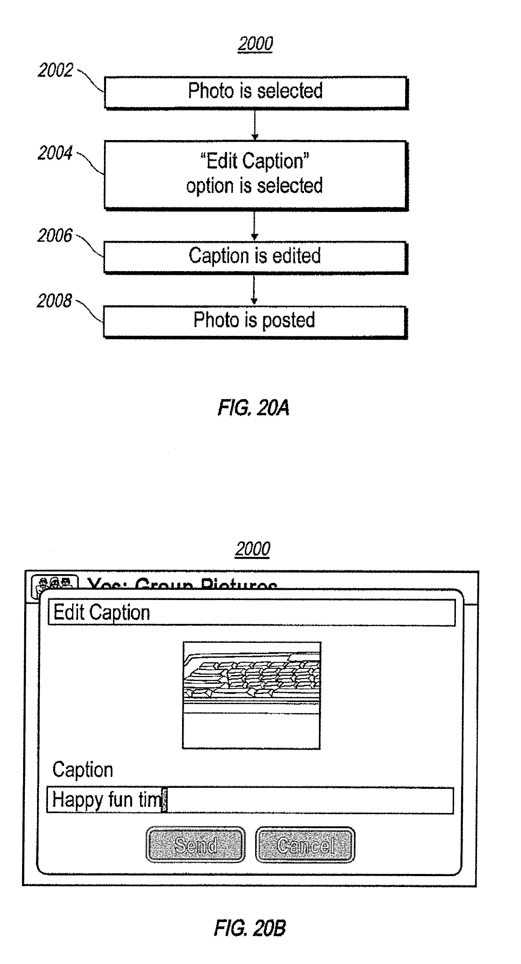

Figure 20A is a flowchart of a method for editing a caption to a photo in accordance with an exemplary embodiment;

Figure 20B is a screenshot of a menu with the "Edit Caption" option highlighted in accordance with an exemplary embodiment;

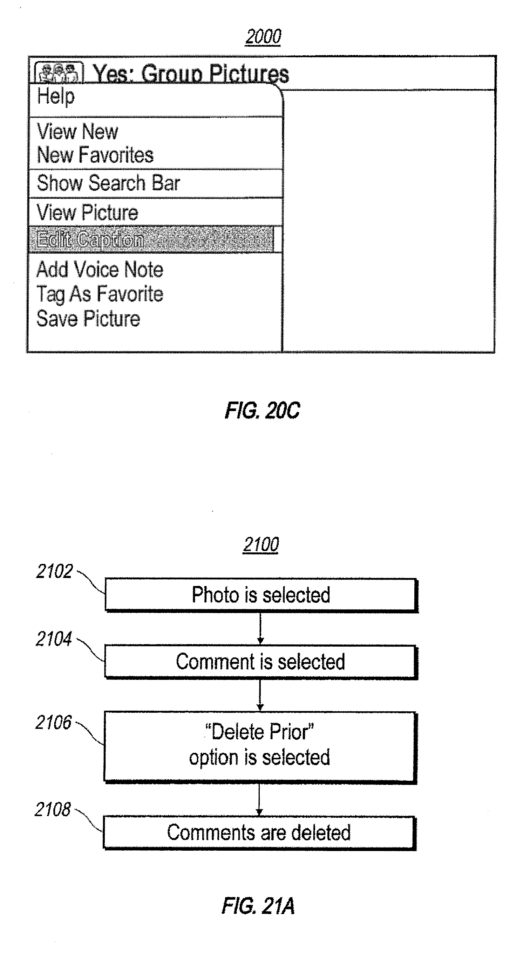

Figure 20C is a screenshot of a caption being edited in accordance with an exemplary embodiment;

Figure 21A is a flowchart of a method for deleting prior comments in accordance with an exemplary embodiment;

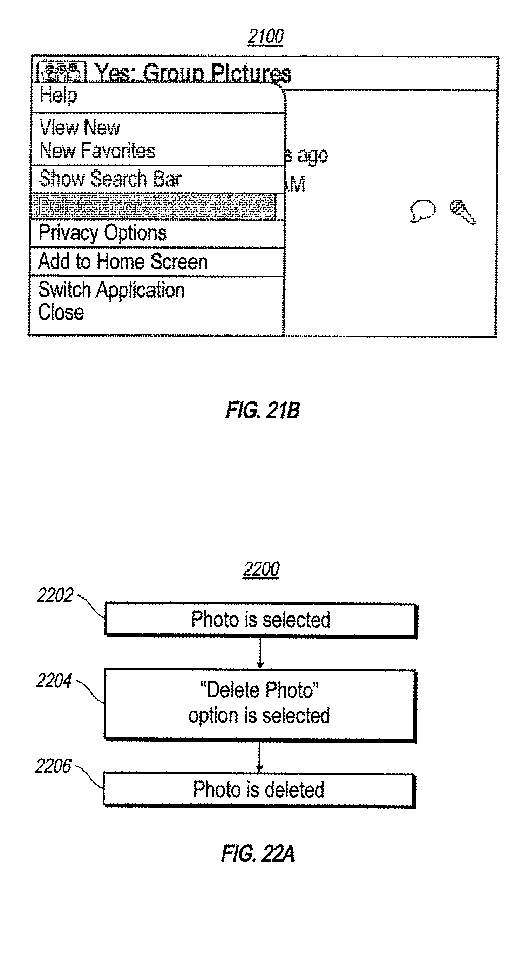

Figure 21B is a screenshot of a menu with the "Delete Prior" option highlighted in accordance with an exemplary embodiment;

Figure 22A is a flowchart of a method for deleting a photo in accordance with an exemplary embodiment;

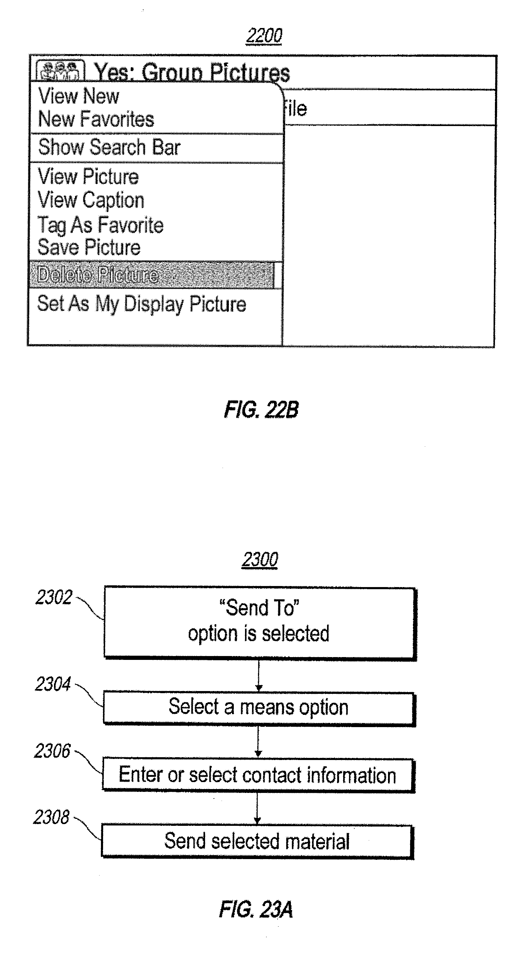

Figure 22B is a screenshot of a menu with the "Delete Photo" option highlighted in accordance with an exemplary embodiment;

Figure 23A is a flowchart of a method for archiving an item or conversation associated with an item in accordance with an exemplary embodiment;

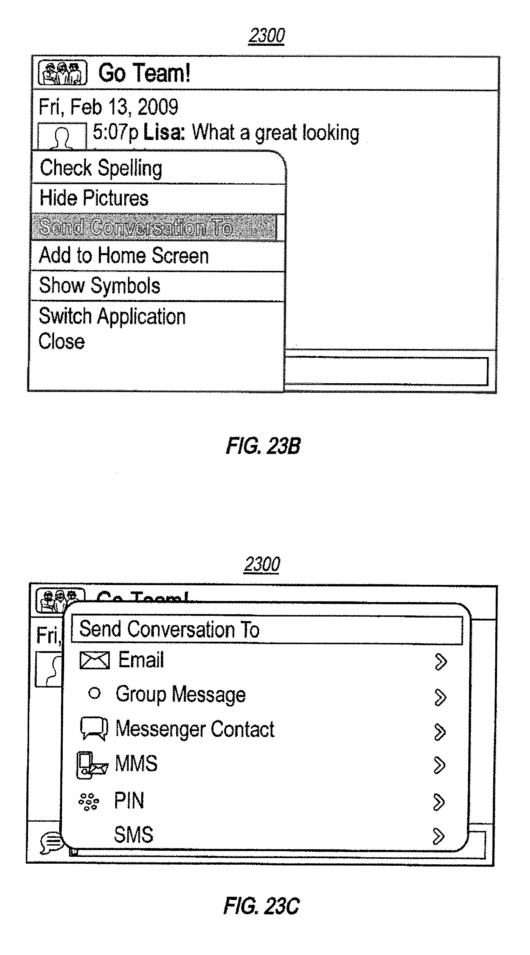

Figure 23B is a screenshot of a menu for selecting a "Sent to" option in accordance with an exemplary embodiment;

Figure 23C is a screenshot of a menu listing the different means to send a selected item or conversation associated with an item in accordance with an exemplary embodiment;

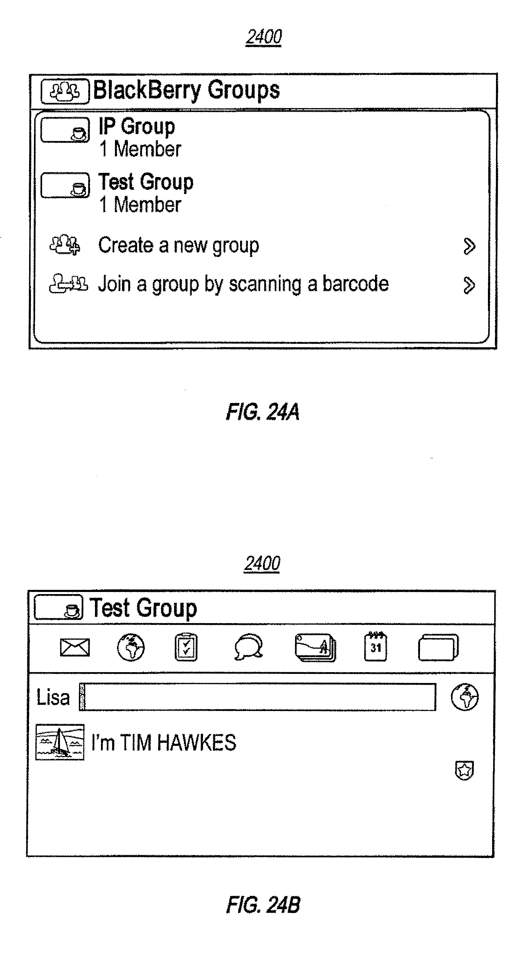

Figure 24A is another screenshot of the group applet in accordance with an exemplary embodiment;

Figure 24B is a screenshot of a main screen for the Test Group in accordance with an exemplary embodiment;

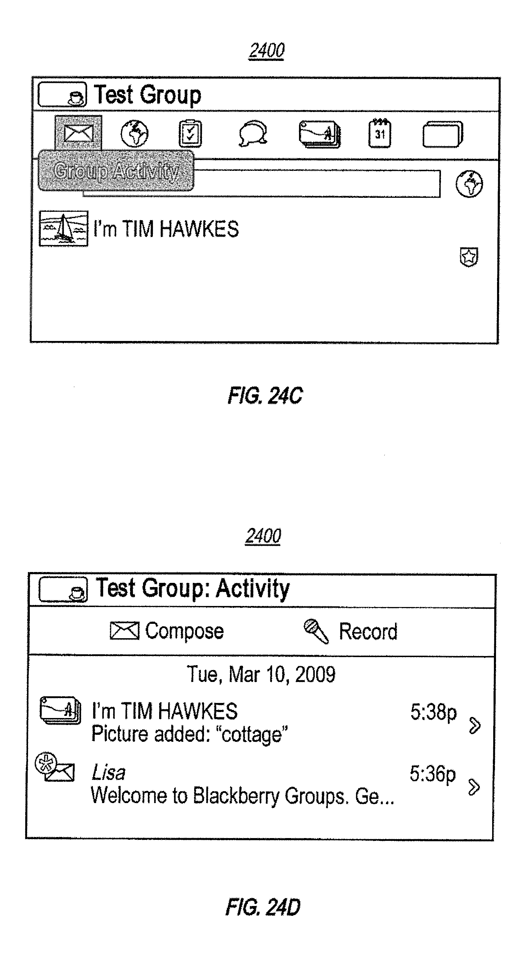

Figure 24C is a screenshot of the Test Group with the overview applet being highlighted in accordance with an exemplary embodiment;

Figure 24D is a screenshot of the overview applet in accordance with an exemplary embodiment;

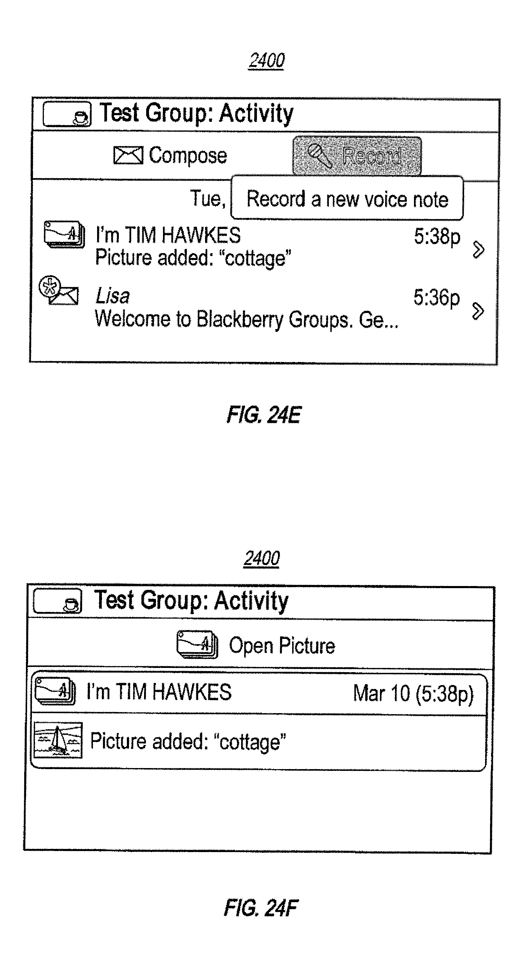

Figure 24E is a screenshot of the record option being highlighted in accordance with an exemplary embodiment;

Figure 24F is a screenshot of a selected thread in accordance with an exemplary embodiment;

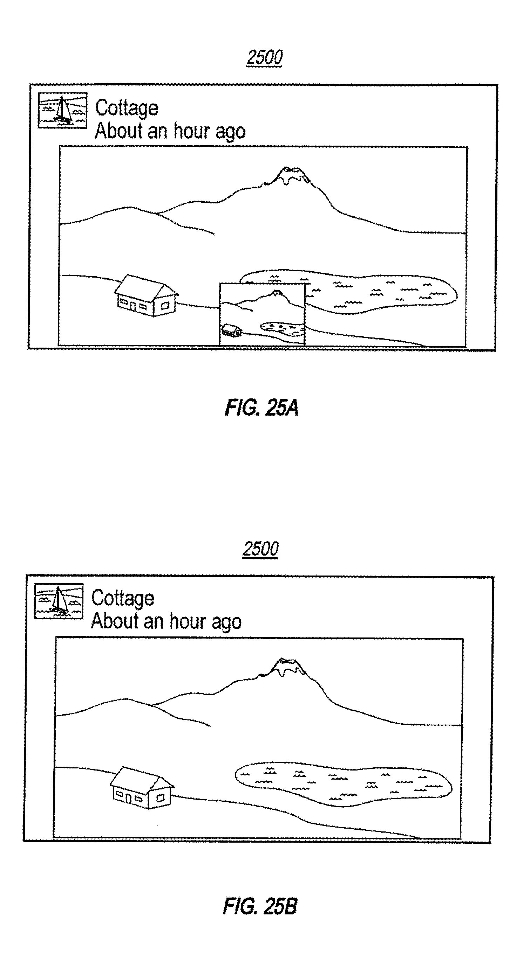

Figure 25A is a screenshot of a photo viewer with an overlay in accordance with an exemplary embodiment;

Figure 25B is a screenshot of a photo viewer without the overlay in accordance with an exemplary embodiment;

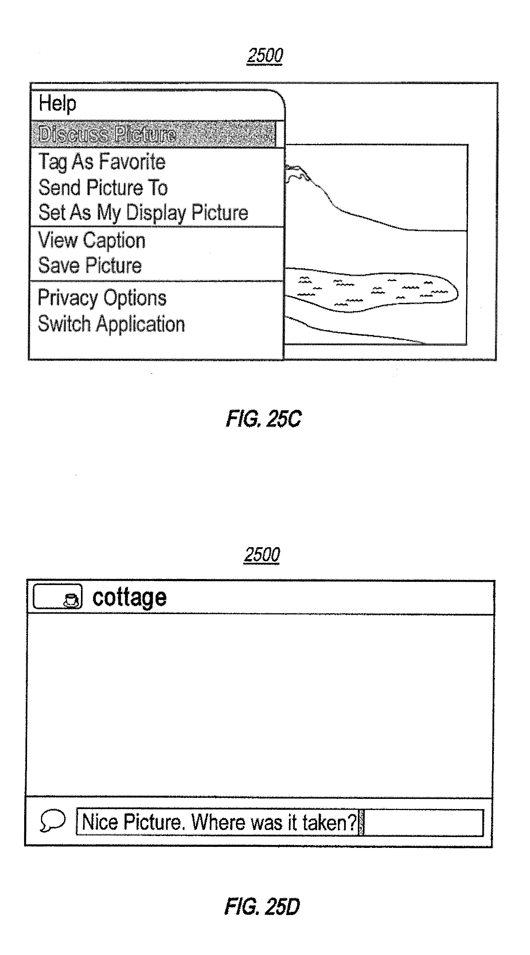

Figure 25C is a screenshot of a menu with the "Discuss Picture" option highlighted for discussing the "Cottage" photograph in accordance with an exemplary embodiment;

Figure 25D is a screenshot of a prompt to enter a comment to be associated with the Cottage photograph in accordance with an exemplary embodiment;

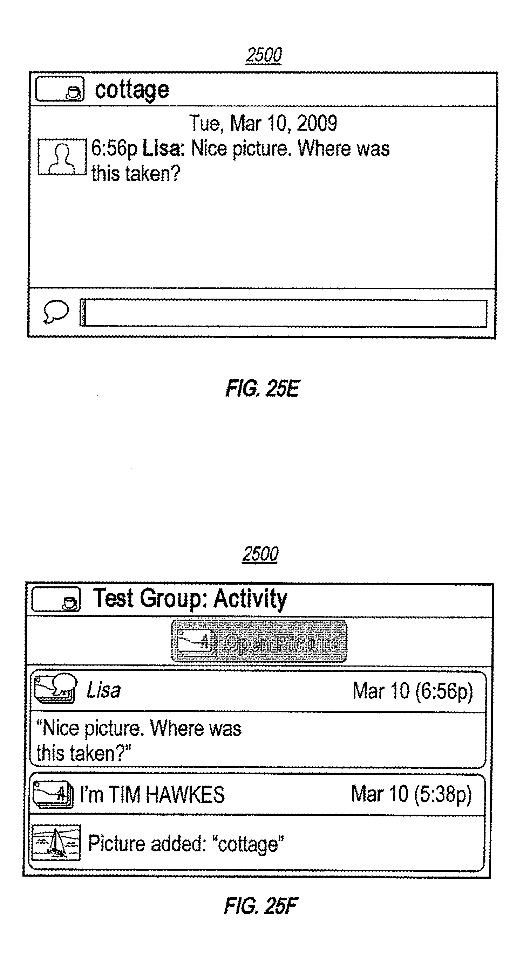

Figure 25E is a screenshot of a comment being posted for the Cottage photograph in accordance with an exemplary embodiment;

Figure 25F is a screenshot of a selected thread with the newest picture added in accordance with an exemplary embodiment;

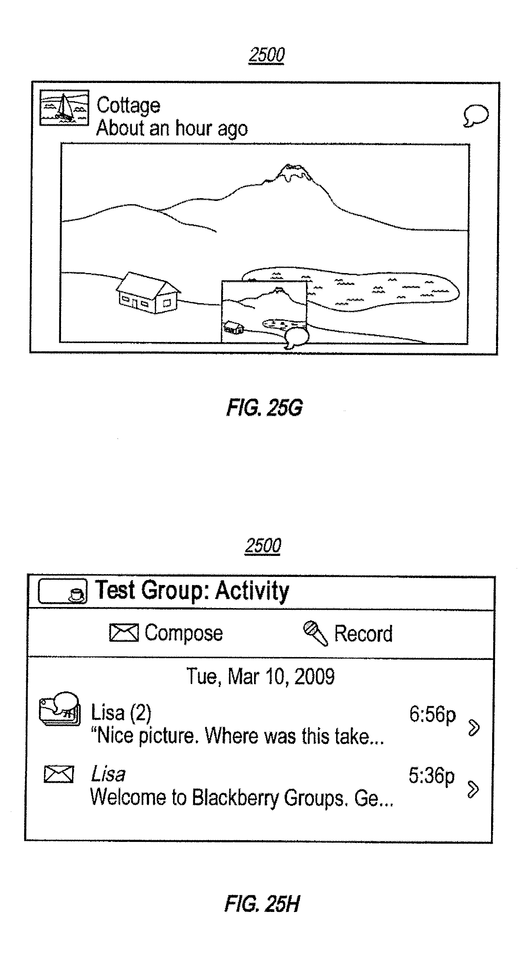

Figure 25G is a screenshot of the photo viewer with an overlay and an icon indicating a message or comment is posted in accordance with an exemplary embodiment;

Figure 25H is a screenshot of the overview applet with a new comment added in accordance with an exemplary embodiment;

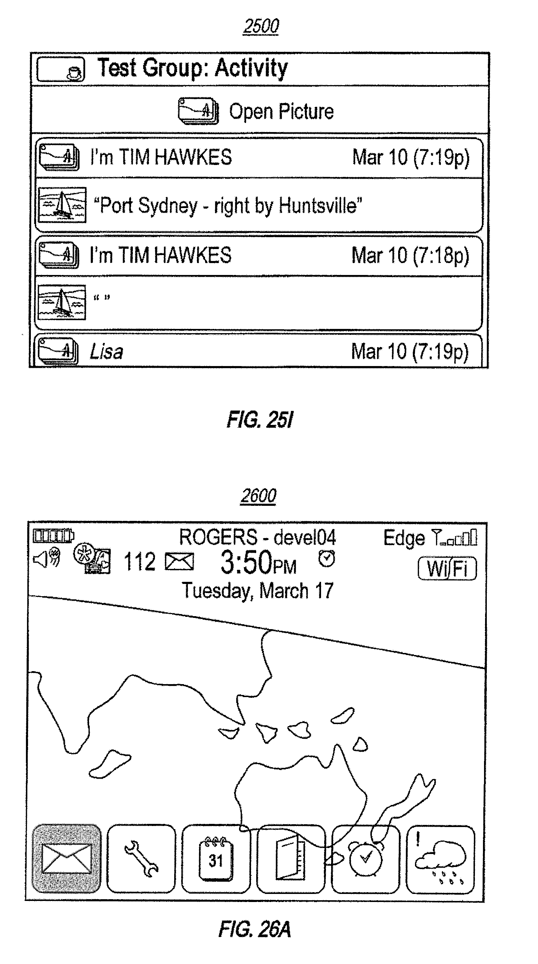

Figure 25I is a screenshot of a selected thread in accordance with an exemplary embodiment;

Figure 26A is a screenshot of a home screen for a communication device having an icon indicating activity associated with the Test Group in accordance with an exemplary embodiment;

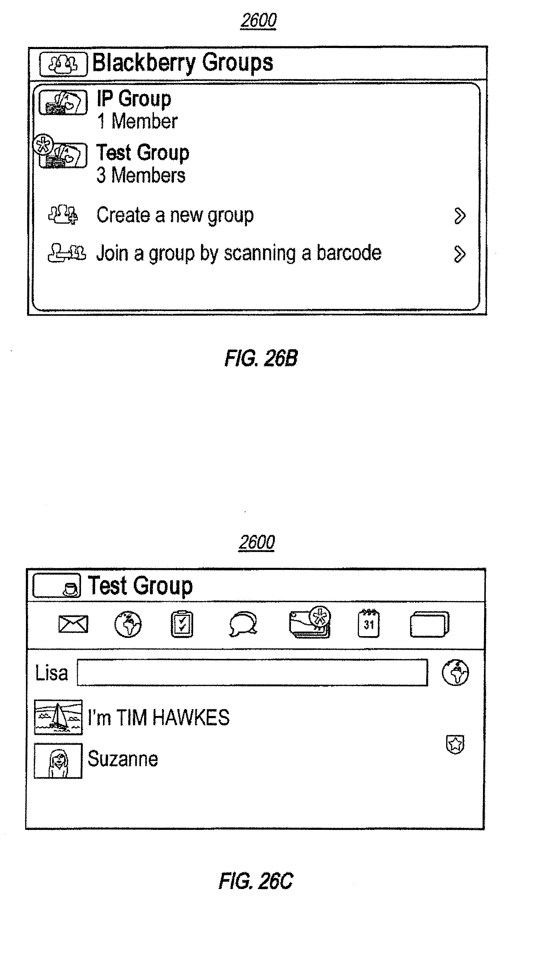

Figure 26B is a screenshot of the group applets including an icon indicating new activity in the Test Group in accordance with an exemplary embodiment;

Figure 26C is a screenshot of the home screen for the Test Group including an icon indicating new activity in the Group Photos in accordance with an exemplary embodiment;

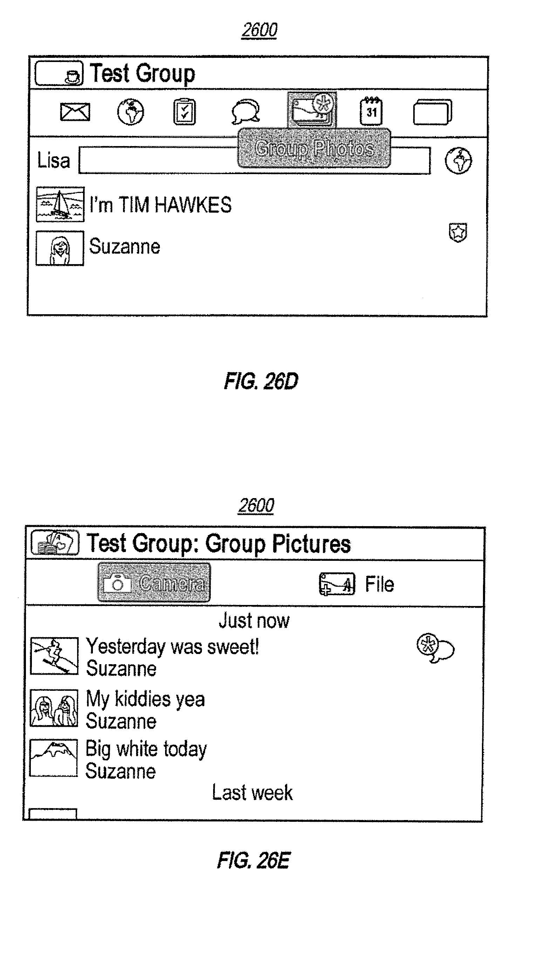

Figure 26D is a screenshot of the Test Group with Group Photo being highlighted in accordance with an exemplary embodiment;

Figure 26E is a screenshot of the home screen for the Group Photos section in accordance with an exemplary embodiment;

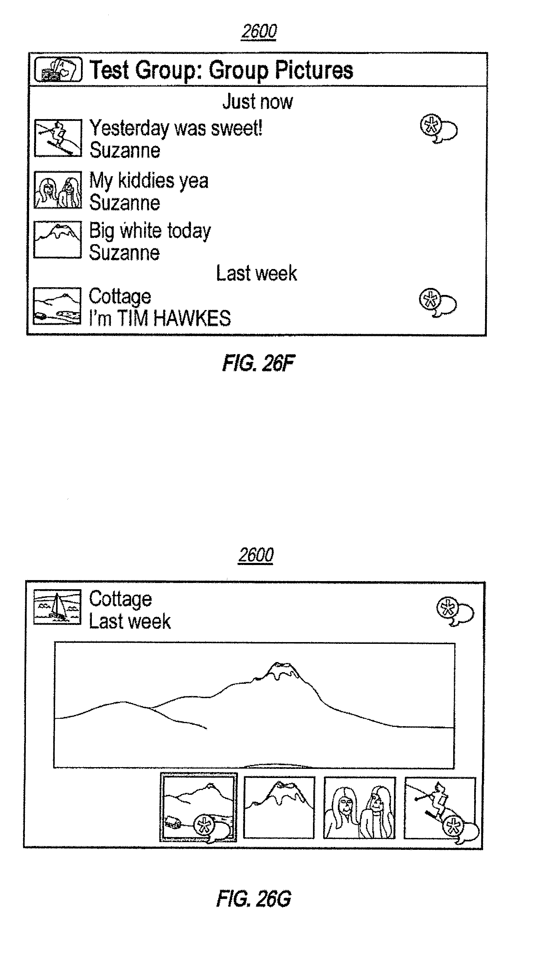

Figure 26F is a screenshot of the Group Photos after scrolling down the screen in accordance with an exemplary embodiment;

Figure 26G is a screenshot of a selected photograph with an overlay having multiple photographs in accordance with an exemplary embodiment;

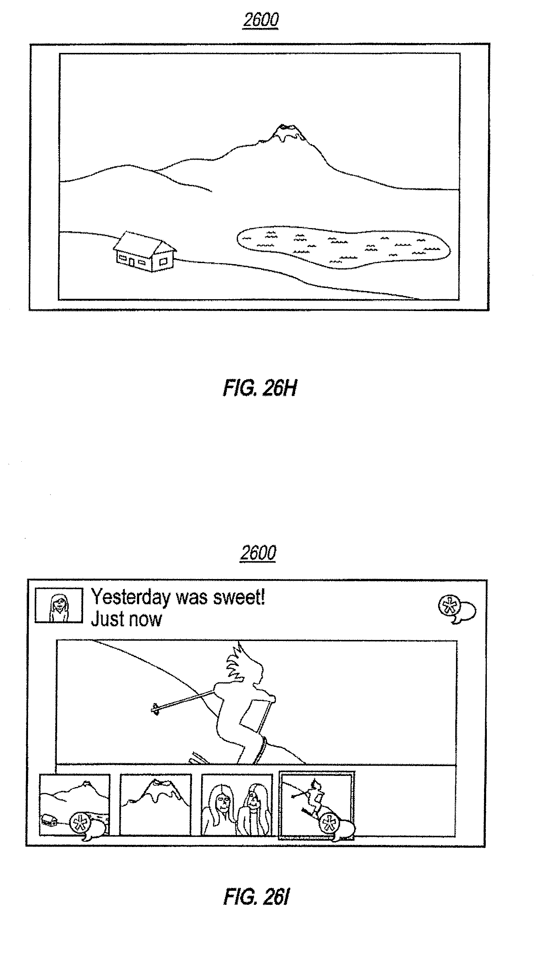

Figure 26H is a screenshot of the selected photograph without the overlay having multiple photographs in accordance with an exemplary embodiment;

Figure 26I is a screenshot of another selected photograph with an overlay having multiple photographs in accordance with an exemplary embodiment;

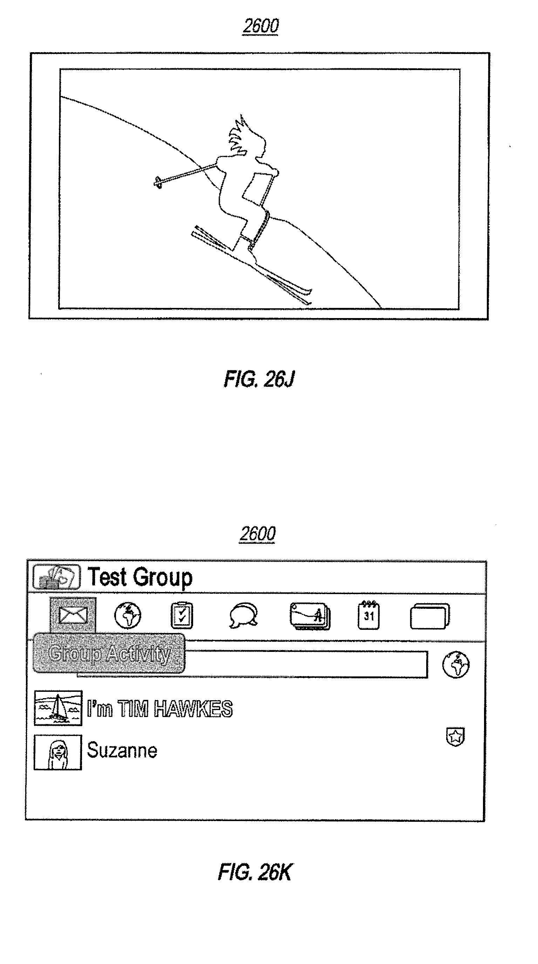

Figure 26J is a screenshot of another selected picture without the overlay having multiple photographs in accordance with an exemplary embodiment;

Figure 26K is a screenshot of the home screen for the Test Group with the Overview applet being highlighted in accordance with an exemplary embodiment;

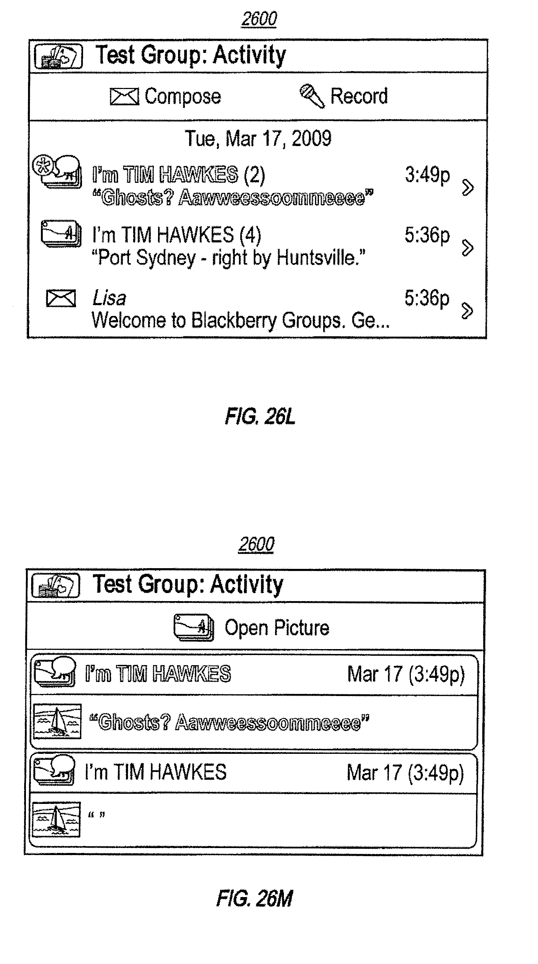

Figure 26L is a screenshot of the overview section listing messages in accordance with an exemplary embodiment;

Figure 26M is a screenshot with a thread in the overview applet being highlighted in accordance with an exemplary embodiment; and

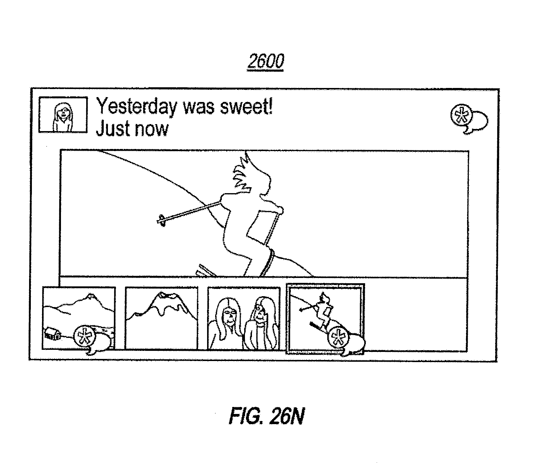

Figure 26N is a screenshot of a picture associated with the highlighted thread in accordance with an exemplary embodiment.

### DETAILED DESCRIPTION OF THE DRAWINGS

It is noted that the software described herein may be tangibly embodied in one or more physical media, such as, but not limited to, a compact disc (CD), a digital versatile disc (DVD), a floppy disk, a hard drive, read only memory (ROM), random access memory (RAM), as well as other physical media capable of storing software, and/or combinations thereof. Moreover, the figures illustrate various components (e.g., servers, mobile devices, and network elements, etc.) separately. The functions described as being performed at various components may be performed at other components, and the various components may be combined and/or separated. Other modifications also may be made.

Having a real time or near real time "conversation" between users of communication devices can be impractical. Typically, conventional messaging systems require an originator of a message to generate a list of contacts to receive the message and to send the message to each specified recipient. Not only does generating the list take time, but it also allows for an opportunity for the originator of the message to inadvertently leave one or more contacts off of the list. As a result, any person who is left off of the original message may never receive the message, follow-up comments, or any combination thereof, unless someone adds the omitted person or people to the messaging chain. Furthermore, to generate a message to the same group, the originator may have to generate the list of recipients again.

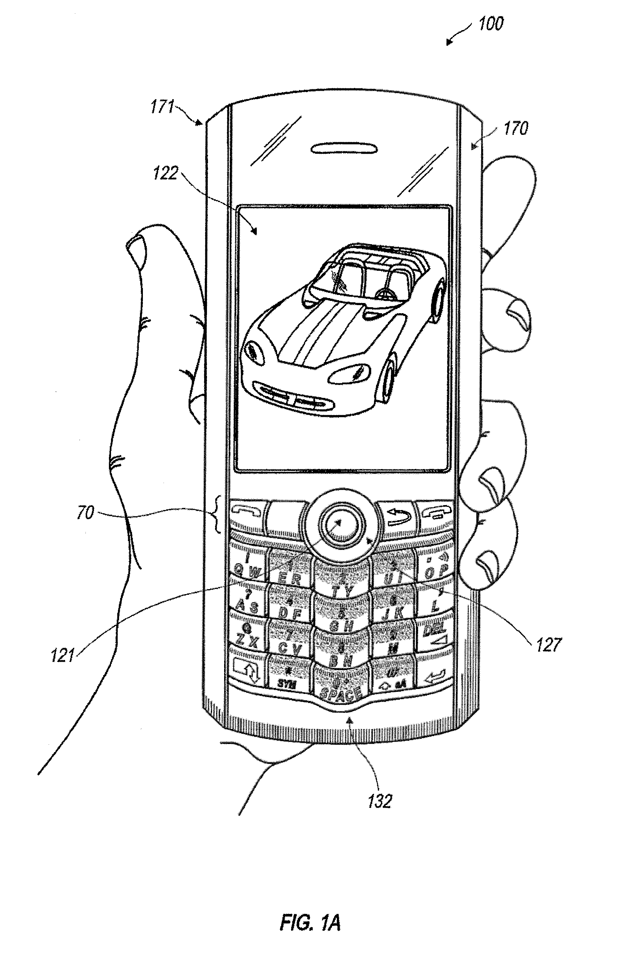

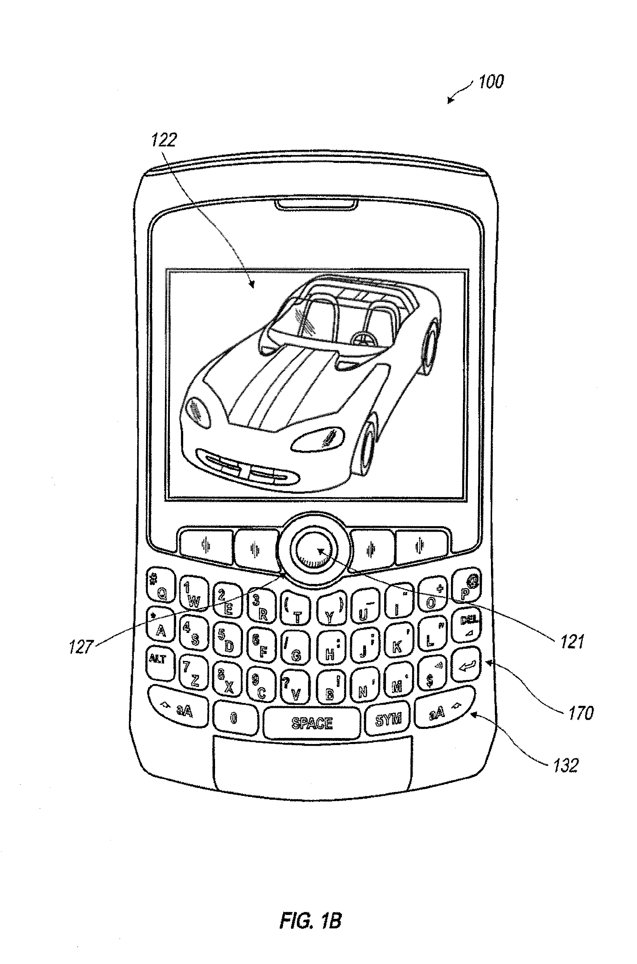

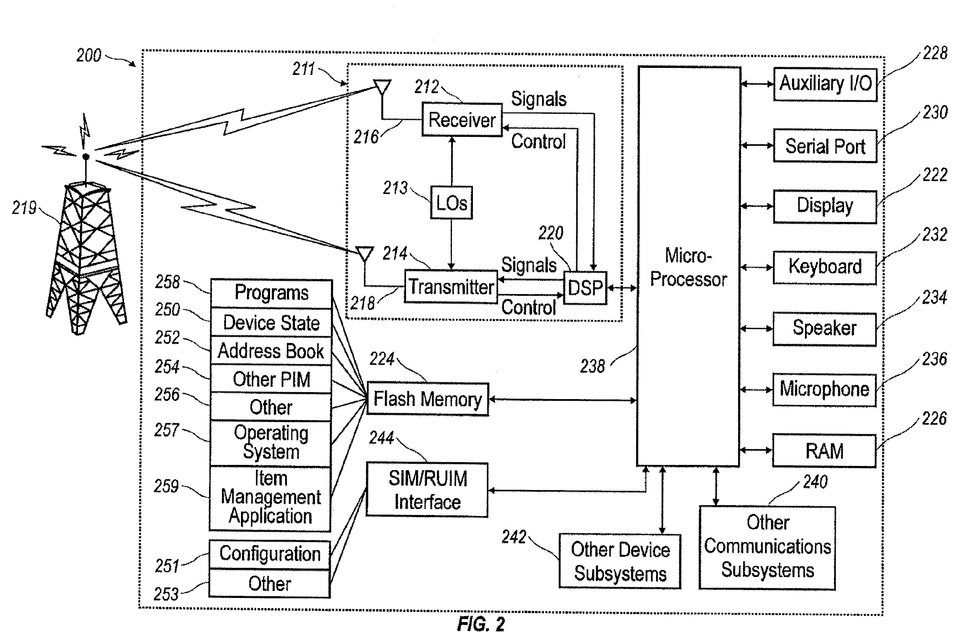

Referring to Figures 1A and 1B, front views of handheld communication devices having a reduced QWERTY keyboard and a full QWERTY keyboard, respectively, with each capable of incorporating the messaging application in accordance with exemplary embodiments are illustrated. As shown, the exemplary communication devices 100 are communicatively coupled to a wireless network 319 as exemplified in the block diagram of Figure 2. These figures are exemplary only, and those persons skilled in the art will appreciate the additional elements and modifications necessary to make the communication device 100 work in particular network environments. While in the illustrated embodiments, the communication devices 100 are smart phones, however, in other embodiments, the communication devices 100 may be personal digital assistants (PDA), laptop computers, desktop computers, servers, or other communication device capable of sending and receiving electronic messages.

Referring to Figure 2, a block diagram of a communication device in accordance with an exemplary embodiment is illustrated. As shown, the communication device 100 includes a microprocessor 238 that controls the operation of the communication device 100. A communication subsystem 211 performs all communication transmission and reception with the wireless network 219. The microprocessor 238 further can be communicatively coupled with an auxiliary input/output (I/O) subsystem 228 which can be communicatively coupled to the communication device 100. Additionally, in at least one embodiment, the microprocessor 238 can be communicatively coupled to a serial port (for example, a Universal Serial Bus port) 230 which can allow for communication with other devices or systems via the serial port 230. A display 122 can be communicatively coupled to microprocessor 238 to allow for displaying of information to an operator of the communication device 100. When the communication device 100 is equipped with a keyboard 132, the keyboard can also be communicatively coupled with the microprocessor 238. The communication device 100 can include a speaker 234, a microphone, 236, random access memory (RAM), and flash memory 224 all of which may be communicatively coupled to the microprocessor 238. Other similar components may be provided on the communication device 100 as well and optionally communicatively coupled to the microprocessor 238. Other communication subsystems 240 and other communication device subsystems 242 are generally indicated as being functionally connected with the microprocessor 238 as well. An example of a communication subsystem 240 is that of a short range communication system such as BLUETOOTH^{®} communication module or a WI-FI^{®} communication module (a communication module in compliance with IEEE 802.11b) and associated circuits and components. Additionally, the microprocessor 238 is able to perform operating system functions and enables execution of programs on the communication device 100. In some embodiments not all of the above components may be included in the communication device 100. For example, in at least one embodiment the keyboard 132 is not provided as a separate component and is instead integrated with a touchscreen as described below.

The auxiliary I/O subsystem 228 can take the form of a variety of different navigation tools (multi-directional or single-directional) such as a trackball navigation tool 221 as illustrated in the exemplary embodiment shown in Figures 1A and 1B, or a thumbwheel, a navigation pad, a joystick, touch-sensitive interface, or other I/O interface. These navigation tools may be located on the front surface of the communication device 100 or may be located on any exterior surface of the communication device 100. Other auxiliary I/O subsystems can include external display devices and externally connected keyboards (not shown). While the above examples have been provided in relation to the auxiliary I/O subsystem 228, other subsystems capable of providing input or receiving output from the communication device 100 are considered within the scope of this disclosure. Additionally, other keys may be placed along the side of the communication device 100 to function as escape keys, volume control keys, scrolling keys, power switches, or user programmable keys, and may likewise be programmed accordingly.

As may be appreciated from Figures 1A and 1B, the communication device 100 comprises a lighted display 122 located above a keyboard 132 constituting a user input and suitable for accommodating textual input to the communication device 100. The front face 170 of the communication device 100 has a navigation row 70. As shown, the communication device 100 is of unibody construction, also know as a "candy-bar" design.

Keys, typically of a push-button or push-pad nature, perform well as data entry devices but present problems to the operator when they must also be used to effect navigational control over a screen-cursor. In order to solve this problem the present communication device 100 may include an auxiliary input that acts as a cursor navigation tool 127 and which is also exteriorly located upon the front face 170 of the communication device 100. Its front face location allows the tool to be easily thumb-actuable like the keys of the keyboard 132. An embodiment provides the navigation tool 127 in the form of a trackball 121 which can be utilized to instruct two-dimensional screen cursor movement in substantially any director, as well as act as an actuator when the trackball 121 is depressed like a button. The placement of the navigation tool 127 may be above the keyboard 132 and below the display screen 122; here, it can avoid interference during keyboarding and does not block the operator's view of the display screen 122 during use, e.g., as shown in Figures 1A and 1B.

As illustrated in Figures 1A and 1B, the communication device 100 may be configured to send and receive messages. The communication device 100 includes a body 171 which may, in some embodiments, be configured to be held in one hand by an operator of the communication device 100 during text entry. A display 122 is included which is located on a front face 170 of the body 171 and upon which information is displayed to the operator during text entry. The communication device 100 may also be configured to send and receive voice communications such as mobile telephone calls. The communication device 100 may also include a camera (not shown) to allow the user to take electronic photographs which can be referred to as photos or pictures.

Furthermore, the communication device 100 is equipped with components to enable operation of various programs, as shown in Figure 2. In an exemplary embodiment, the flash memory 224 is enabled to provide a storage location for the operating system 257, device programs 258, and data. The operating system 257 is generally configured to manage other programs 258 that are also stored in memory 224 and executable on the processor 238. The operating system 257 honors requests for services made by programs 258 through predefined program 258 interfaces. More specifically, the operating system 257 typically determines the order in which multiple programs 258 are executed on the processor 238 and the execution time allotted for each program 258, manages the sharing of memory 224 among multiple programs 358, handles input and output to and from other device subsystems 242, and so on. In addition, operators can typically interact directly with the operating system 257 through a user interface usually including the keyboard 132 and display screen 122. While in an exemplary embodiment the operating system 257 is stored in flash memory 224, the operating system 257 in other embodiments is stored in read-only memory (ROM) or similar storage element (not shown). As those skilled in the art will appreciate, the operating system 257, device program 258 or parts thereof may be loaded in RAM 226 or other volatile memory.

As shown in Figure 2, an item management application 259 is stored on Flash Memory 224. The item management application 259 can manage the sending and receiving of items and associated comments. The items can be a digital photograph (which can be referred to as a photo), a calendar, a list, contacts, or a conversation. Comments can be responses to an item or changes to an item. The items and associated comments are linked or associated with a group. The item or associated comment can also comprise a voice note or voice mail message. The group can comprise members. Specifically, each group comprises two or more members that are selected when the group is generated, when a member is added to the group, or any combination thereof. By associating the item to the group, the item and any comments can be provided to the members of the group without a member having to identify each member of the group. For example, when a member is in a group folder, the member can take a photo (an item) and provide the photo to the group, e.g., to each member of the group. A member who receives the photo can comment on the photo with the comment being provided to the group. In other words, the recipient can virtually "flip over" the photo and comment regarding the photo with the comment or comments being provide to the group. Since the item is associated with the group, the comments can be provided to the members of the group without the member having to identify the group or the members. Similarly, the subject matter does not have to be identified since the subject matter is already filled in when the member who sent the item to the group, e.g., the originator of the item, entered the subject intro the subject line of the original posting.

The item management application 259 can be a standalone application, incorporated intro the operating system 257, or incorporated intro another grogram. Along others, the items, associated comments, or any combination thereof, can be push messages, e.g., the items and comments are pushed onto the communication devices 100 associated with each member of the group. Upon receiving a push message, the communication device 100 can display the item or associated comment. For example, the item management application 259 associated with a communication device 100 which is associated with a member of a group, can display the item or associated comment immediately or after the member enters a password. Push messages allow for a real time or near real time conversation since polling is not needed. In such an embodiment, the push messages are not stored at a server. The messages are sent as multicasts. In such an embodiment, the originating communication device 100 send the message once to the network operation center, e.g., a communication subsystem 211, which in turn provides the message to each specified recipient. As a result, the group communication has similar efficiency as communications between two communication devices 100. In one or more other embodiments, the item or associated comment can be an email message, a SMS message, a MMS message, an IM (Instant Messaging) message, e.g., systems that store the message at a server. In another embodiment, a Personal Identification Number (PIN) message can be used. As used in this context, a PIN generally refers to a number that uniquely identifies the communication device 100. In other embodiments, any other message that can send and display the item or associated comment on a communication device 100. The received message may comprise other types of messages which may be currently know or later developed in accordance with after-arising technologies.

When the communication device 100 is enabled for two-way communication within the wireless communication network 219, it can send and receive signals from a mobile communication service. Examples of communication systems enabled for two-way communication include, but are not limited to, the General Packet Radio Service (GPRS) network, the Universal Mobile Telecommunication Service (UMTS) network, the Enhanced Data for Global Evolution (EDGE) network, the Code Division Multiple Access (CDMA) network, High-Speed Packet Access (HSPA) networks, Universal Mobile Telecommunication Service Time Division Duplexing (UMTS-TDD), Ultra Mobile Broadband (UMB) networks, Worldwide Interoperability for Microwave Access (WiMAX), and other networks that can be used for data and voice, or just data or voice. For the systems listed above, the communication device 100 may require a unique identifier to enable the communication device 100 to transmit and receive signals from the communication network 219. Other systems may not require such identifying information. GPRS, UMTS, and EDGE use a Subscriber Identity Module (SIM) in order to allow communication with the communication network 219. Likewise, most CDMA systems use a Removable Identity Module (RUIM) in order to communicate with the CDMA network. The RUIM and SIM card can be used in multiple different communication devices 100. The communication device 100 may be able to operate some features without a SIW/RUIM card, but it will not be able to communicate with the network 219. A SIM/RUIM interface 244 located within the communication device 100 allows for removal or insertion of a SIM/RUIM card (not shown). The SIM/RUIM card features memory and holds key configurations 251, and other information 253 such as identification and subscriber related information. With a properly enabled communication device 100, two-way communication between the communication device 100 and communication network 219 is possible.

If the communication device 100 is enabled as described above or the communication network 219 does not require such enablement, the two-way communication enabled communication device 100 is able to broth transmit and receive information from the communication network 219. The transfer of communication can be from the communication device 100 or to the communication device 100. In order to communicate with the communication network 219, the communication device 100 in the presently described exemplary embodiment is equipped with an integral or internal antenna 218 for transmitting signals to the communication network 219. Likewise the communication device 100 in the presently described exemplary embodiment is equipped with another antenna 216 for receiving communication from the communication network 219. These antennae (216, 218) in another exemplary embodiment are combined into a single antenna (not shown). As one skilled in the art would appreciate, the antenna or antennae (216, 218) in another embodiment are externally mounted on the communication device 100.

When equipped for two-way communication, the communication device 100 features a communication subsystem 211. As is understood in the art, this communication subsystem 211 is modified so that it can support the operational needs of the communication device 100. The subsystem 211 includes a transmitter 214 and receiver 212 including the associated antenna or antennae (216, 218) as described above, local oscillators (LOs) 213, and a processing module 220 which in the presently described exemplary embodiment is a digital signal processor (DSP) 220.

It is contemplated that communication by the communication device 100 with the wireless network 219 can be any type of communication that broth the wireless network 219 and communication device 100 are enabled to transmit, receive and process. In general, these can be classified as voice and data. Voice communication generally refers to communication in which signals for audible sounds are transmitted by the communication device 100 through the communication network 219. Data generally refers to all other types of communication that the communication device 100 is capable of performing within the constraints of the wireless network 219.

Example device programs that can depend on such data include email, contacts and calendars. For each such program synchronization with home-based versions on the programs can be desirable for either or both of their long term and short term utility. As an example, emails are often time sensitive, so substantially real time (or near-real time) synchronization may be desired. Contracts, on the other hand, can be usually updated less frequently without inconvenience. Therefore, the utility of the communication device 100 is enhanced when connectable within a communication system, and when connectable on a wireless basis in a network 219 in which voice, text messaging, and other data transfer are accommodated.

The keyboard 132 includes a plurality of keys that can be of a physical nature such as actuable buttons, or they can be of a software nature, typically constituted by virtual representations of physical keys on a display screen 122 (referred to herein as "virtual keys"). It is also contemplated that the user input can be provided as a combination of the two types of keys. Each key of the plurality of keys has at least one actuable action which can be the input of a character, a command or a function. In this context, "characters" are contemplated to exemplarily include alphabetic letters, language symbols, numbers, punctuation, insignias, icons, pictures, and even a blank space.

In the case of virtual keys, the indicia for the respective keys are shown on the display screen 122, which in one embodiment is enabled by touching the display screen 122, for example, with a stylus, finger, or other pointer, to generate the character or activate the indicated command or function. Some examples of display screens 122 capable of detecting a touch include resistive, capacitive, projected capacitive, infrared and surface acoustic wave (SAW) touchscreens.

Physical and virtual keys can be combined in many different ways as appreciated by those skilled in the art. In one embodiment, physical and virtual keys are combined such that the plurality of enabled keys for a particular program or feature of the communication device 100 is shown on the display screen 122 in the same configuration as the physical keys. Using this configuration, the operator can select the appropriate physical key corresponding to what is shown on the display screen 122. Thus, the desired character, command or function is obtained by depressing the physical key corresponding to the character, command or function displayed at a corresponding position on the display screen 122, rather than touching the display screen 122.

In at least one embodiment, a communication device 100 that is configured to send and receive email messages comprises a body 171 configured to be held in a text entry orientation by an operator or user. (For example see Figures 1A and 1B). The body 171 of the communication device 100 has a front face 170 at which a display screen 122 is located and upon which information is displayed to the operator of the communication device 100 in the text entry orientation. The communication device 100 further comprises a microprocessor configured to run programs on the communication device 100 and to receive operator commands from user inputs, such as a keyboard 132 and trackball 121, located on the communication device 100.

While the above description generally describes the systems and components associated with a handheld communication device, the communication device 100 could be another communication device such as a PDA, a laptop computer, desktop computer, a server, or other communication device. In those embodiments, different components of the above system might be omitted in order provide the desired communication device 100. Additionally, other components not described above may be required to allow the communication device 100 to function in a desired fashion. The above description provides only general components and additional components may be required to enable the system to function. These systems and components would be appreciated by those of ordinary skill in the art.

Referring to Figure 2 again, the communication device 100 can include one or more item management applications 259 that manage items, associated comments, and groups associated with the item and associated comments. A group can include a set of members, such as contacts, users, or entities. For example, groups can comprise family members, co-workers, book club members, players on a sports team, parents of players on a sports team, and members of a golf foursome. A member can be a member of multiple groups. Typically a group comprises mostly a static set of members. However, the members of the group may change, for example, the originator of the group (the member who formed the group) may add, subtract or change members of the group. Since the group comprises a set of members, the group can be referred to as a preselected group, e.g., a group having a plurality of known users. A group can share data such as messages, items, or comments. For example, a group can share an item, such as a digital photograph, a calendar, a list, voice messages, as well as comments or changes to the item.

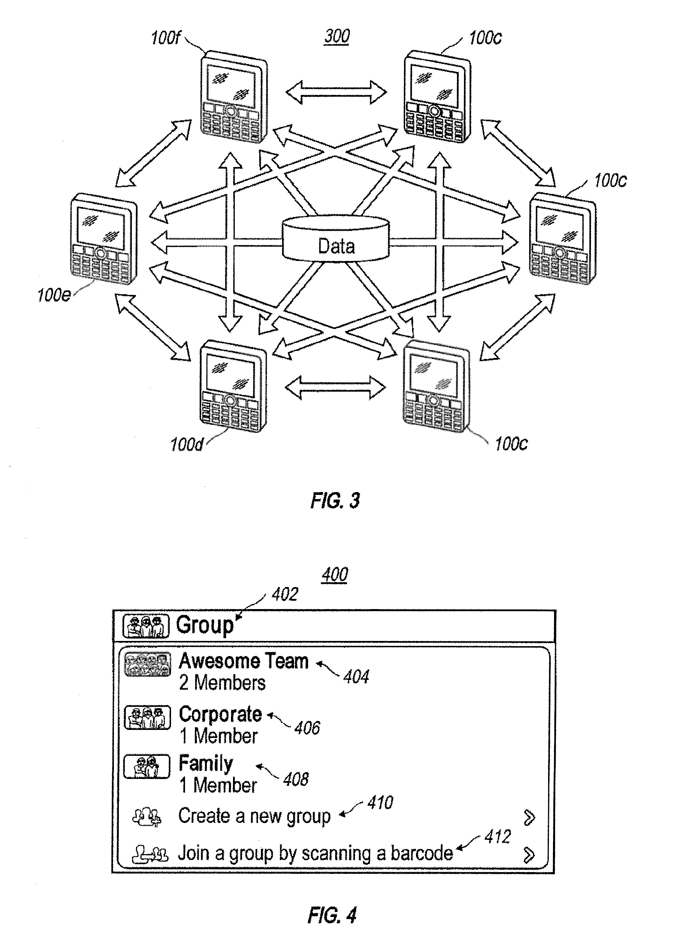

Referring to Figure 3, a block diagram showing the relationships among the members of a group in accordance with an exemplary embodiment is illustrated. As shown, data 302 is shared among all the members of a group 300. Specifically, data 302 is shared, e.g., sent and received, to each and every member of the group via communication devices 100a-f. For example, if the user of communication device 100a generates an item, e.g., an electronic picture, and sends the item to the group 300, the item is provided to the members of the group 300, e.g., communication devices 100b-f. If the user of communication device 100b comments on the item, then the comments are provided to the other members of the group 300, e.g., communication devices 100a and 100c-f.

As illustrated in Figure 3, the data is transmitted between the individual communication devices 100 without the need for a group server. Using a device identifier, each communication device 100 is capable of communicating directly with the other communication devices 100. The transmission of the data can be over a cellular network, Wi-Fi network or other communication system that enables peer to peer processing of data. While servers or other similar infrastructure can be implemented on the communication network, a specialized host server or servers are not required in at least one embodiment. For example in the case of a wireless carrier, the members of the group can be identified using a device identifier such as a person identification number (PIN), SIM card number, IMEI number, or the like. The communication of data between the individual communication devices 100 can use one of the above described device identifiers that the communication network recognizes and sends the data between the communication devices 100 using only the desired communication network. In other embodiments, specialized architecture that recognizes and processes these device identifiers can be implemented as well. Thus, the communication of the data can be described as peer-to-peer and serverless because it does not rely upon a specialized server for handling of messages, pictures, and other data among members of the group 300.

**[00100]** Referring to Figure 4, a screenshot of a display showing the group applet in accordance with an exemplary embodiment is illustrated. The display 400 can include a listing of the groups the user of the communication device 100 is a member of. As shown, the user is a member of three groups: the "Awesome Team" 402 having two other members, the "Corporate" group 404 having one other member, and the "Family" group 406 having one other member. In this example, the number of members does not include the member of the communication device 100. The group applet allows the user of the communication device 100 to create new groups. A group can be created using several means. For example, a group originator can click on the "Create a new group" menu option 408, enter a group name, and choose a group type (e.g., friends, family, or work). The group type can allow the group originator to control how the communication devices associated with a group are used, e.g., each member is only allowed a set amount of talking minutes. Once a member creates a group, the member can invite members to join the group. For example, the member can send invitations to potential members of a group, e.g., via an email message or a PIN message. In another example, an invited group member can receive a message having a barcode and can use the "Join a group by scanning a barcode" menu option 410 to scan (or take a photo of a barcode) to join a group associated with the barcode. As one skilled in the art would appreciate, other means to form groups can be used.

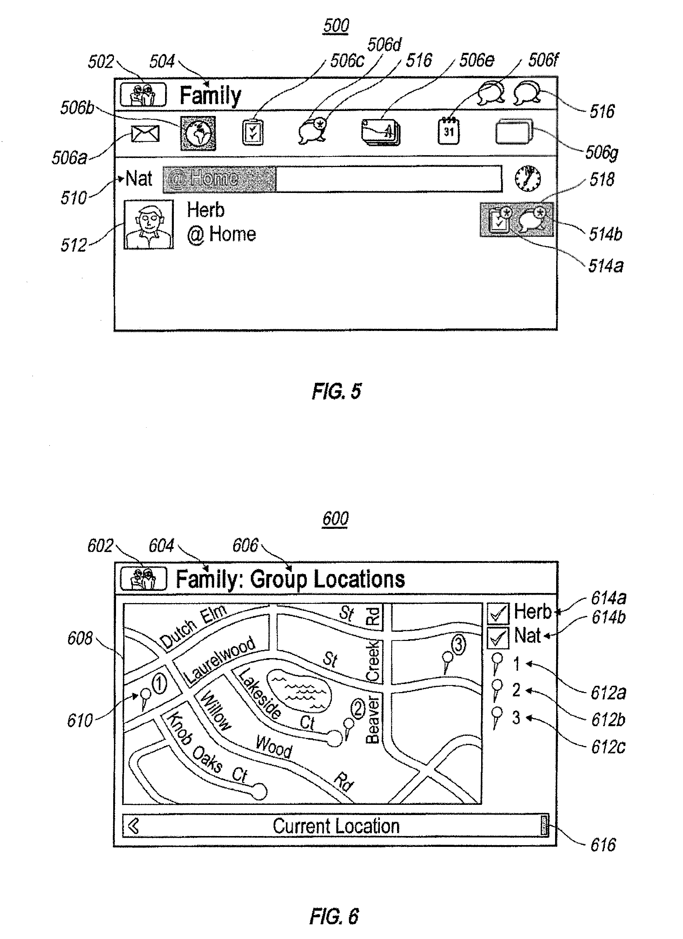

Referring to Figure 5, a screenshot of the location applet for the family group in accordance with an exemplary embodiment is illustrated. The screenshot 500 for the location applet can include a group icon 502, group name 504, global applets 506a-g, a member identifier 508, member's location 510, a listing of the group members 512, the member applets 514a, 514b, and new message icons 516. The group icon 502 can be an icon representing the group. The group name 504 can identify the group from other groups. The global applets 506-a-g can represent applets that can be used by the member of the group, e.g., the family group. As one skilled in the art would appreciate, more, less, or different group applets 506 can be displayed.

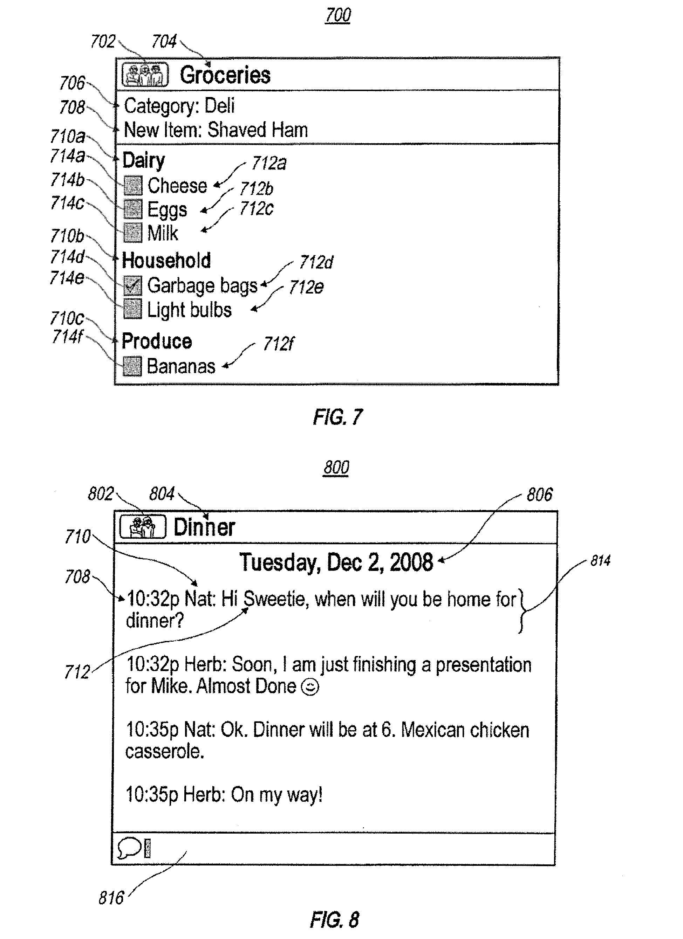

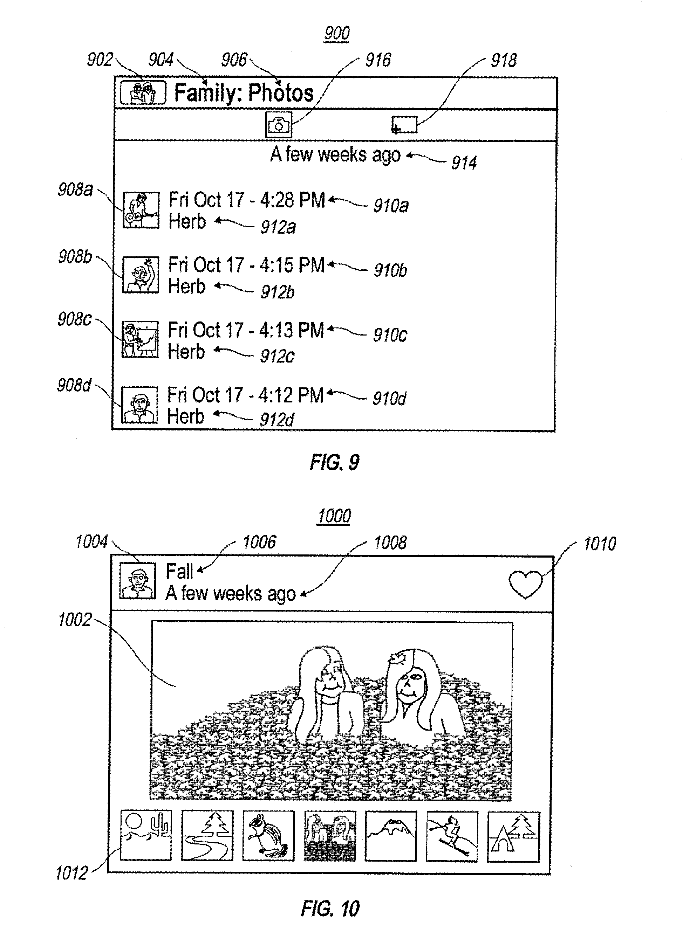

The global applets 506 can include an overview applet 506a, location applet 506b, a list applet 506c, a conversation applet 506d, a photo applet 506e, a calendar applet 506f, and a contacts applet 506g. The overview applet 506a can allow a user to compose a message, record a voice note, review messages, or any combination thereof. The overview applet 506a is discussed below. The location applet 506b can provide the locations of one or more members of a group. For example, if a user of the communication device 100 selected the location applet 506b, the communication device 100 can display a map showing the location of one or more members in the group, as shown in Figure 6. Using the location applet 506b, a member can update his or her location. The global lists applet 506c can create, edit, revise, and display a list for the group. For example, if a user of the communication device 100 selected the list applet 506c, the communication device 100 can display a list (such as a shopping list, a to-do list or a shopping list) as shown in Figure 7. The conversation applet 506d can cause the display of one or more conversations along the group members. For example, if a user of the communication device 100 selected the conversation applet 506d, the communication device 100 can display a list of one or more conversations among the group as shown in Figure 8. Conversations can be chats or chat sessions. Using the conversation applet 506d, a member can enter and post one or more comments. The photo applet 506e can cause the display of, add, post, or comment on one or more electronic photographs or pictures. For example, if a user of the communication device 100 selected the photo applet 506e, the communication device 100 can display one or more photographs or thumbnail of photographs as shown in Figure 9. The calendar applet 506f can cause the display of a calendar for the group and can include scheduled events. For example, if a user of the communication device 100 selected the calendar applet 506f, the communication device 100 can display a calendar as shown in Figure 10. Using the calendar applet 506f, a user can add, edit, revise, view, or delete one or more calendar events. The contacts applet 506g can cause the display of a list of contacts for the group. For example, if a user of the communication device 100 selected the contacts applet 506g, the communication device 100 can display a list of contacts as shown in Figure 13. Using the contacts applet 506g, a user can add, revise, or delete one or more contacts from an address book.

The member identifier 510 can identify the member associated with the communication device 100, e.g., Nat. The member identifier 510 can be a name, a photograph, another identifier identifying the member, or any combination thereof. The member identifier 510 can include a member's location, e.g., at home. The member can change his or her location, e.g., at work or the gym. A listing of the group members 512 lists the other members of that group and can include the other members' location, e.g., Herb at home. The member applets 514a, 514b can identify the group applets, e.g., applets that the group shares. In this example, the family group shares a list 514a and a conversation 514b. The new data icons 516 can provide an indication that new data has been received. As shown, new data was received in the list applet 514a and the conversation applet 514b. Other icons can be illustrated to show new items or comments. For example, a list icon can indicate that a new list or changes to a list have been received. In another example, a photo icon can indicate that a new photo has been received. An icon 518, e.g., an asterisk in a circle, can provide a visual indication that a global applet 506a-g contains new data, e.g., an item or comment.

Referring to Figure 6, a screenshot of a map for the location applet in accordance with an exemplary embodiment is illustrated. As shown, a display 600 can include a group icon 602, a group name 604, an applet identifier 606, a map, 608, current location 610, other locations or points of interest 612a-c, members 614a,b, and a time slider 616. The group icon 602 can be an icon representing the group. The group name 604 can identify the group from the other groups. The group applet 606 can identify the applet, e.g., the location applet. The map 608 can show the current location 610 of a member of the group, e.g., Nat. The map 608 can also show other locations e.g., locations 1, 2, and 3, associated with the member and the corresponding names 612a-c of the locations. Specifically, the map 608 can show locations, or points of interest, associated with Nat 614b, e.g., the home location 612a, the work location 612b and the gym location 612c. If a user clicks on another member of the group, e.g., Herb 614a, the map can show similar information associated with Herb. The number of locations and corresponding names of the locations can vary as one skilled in the art would appreciate. In addition, the user can use a time slider 616 to show a member's location at a specific time. For example, the user can slide or scroll the time slider to different times in the day to show the location of a member. In at least one embodiment, the location of the member can be determined using a GAPS unit in the communication device 100 associated with the user. In alternate embodiments, other position location systems can be used to determine the location of a member via the member's corresponding communication device 100. The location applet can display a map 608 showing the locations of each member of the group. The location applet can display a map 608 showing the route, e.g., the past locations, of a member. Using the communication device 100, a member can disable the location feature thereby not allowing the location applet to determine and show the member's location.

Referring to Figure 7, a screenshot of the list applet in accordance with an exemplary embodiment is illustrated. As shown, the display 700 can include a group icon 702, group name 704, a category field 706, a new item field 708, headers 710a-c, list items, 712a-f, and boxes 714a-f. The group icon 702 can be an icon representing the group. The group name 704 can identify the group from other groups, e.g., a grocery group. The category field 706 can be displayed top allow the user of the communication device 100 to enter a new or existing category 710 to be added to the list. For example, as shown, the user can add "Deli" as a new category for the shopping list. Alternatively, the user can enter an existing category, e.g., diary 710a, household 710b, or produce 710c, to add a new item under that category. A new item field 708 can be displayed to allow the user of the communication device 100 to enter a new item 712 to be added to the list, e.g., shaved ham. Additional information can also be entered, e.g., quantity or brand. As shown, the list an include boxes 714a-f ta provide an indication whether an item in the list has been grabbed, e.g., by selecting an item using the navigation tool 127 of the communication device 100, a check can be placed in a box 714 to indicate that the item has been grabbed. As shown, a check in the garbage bag box 714d indicates that the person grabbed garbage bags. In addition, the items 712a-f, the boxes 714a-f or any combination thereof can be displayed to show priority. For example, the milk entry 712c or associated box 714c can be highlighted or colored to show that it is important to get the milk. In another embodiment, the list applet can allow time to be added to indicate when the item is needed. For example, soda for a party can be purchased two days in advance of a party, but the ice needs to be purchased the day of the party. In another embodiment, the list applet can allow for a person to be assigned an item in the list. For example, Herb can be assigned to purchase the milk and Nat can be assigned to purchase the bananas.

In the event that the list is revised, all members of the group that are associated with the list can be provided with the revised list. In other words, if a member of the group adds, modifies, or deletes a list entry, all of the members of the group can receive the revised list. For example, a family group having two members: Herb and Nat, Herb can add shaved ham to a grocery list, the communication device 100 associated with Nat would receive the revised list including the shaved ham entry. If a member of the group adds a comment regarding the item, e.g., the list, all of the members of the group receive the comment as well as any additional comments. For example, for the same family group, if the Nat sends a comment, e.g., "do you want OJ", to the group associated with the item, e.g., the list, the communication device 100 associated with Herb would receive the comment because he is associated with the group that is associated with the list. Similarly, if the Herb responds with a comment saying "yes", the communication device 100 associated with Nat would receive that comment. Since the item, e.g., list, is associated with the group, the comments are sent to the other members of the group without having top enter member's names, a subject, or any combination thereof. A list can be a global list, e.g., a list having three or more members associated with the list, or a private list, e.g., a list having only two members associated with the list.

Referring to Figure 8, a screenshot of a conversation in accordance with an exemplary embodiment is illustrate. As shows, the display 800 can include a group icon 802, a conversation subject 804, a date stamp 806, a timestamp 808 for each entry 814, an author identifier 810, a comment 812, and a comment field 816. The group icon 802 can be an icon representing the group. The conversation name 804 can identify the conversation 800, e.g., a conversation about dinner. The date stamp 806 identifies the date of the conversation 800, e.g., "Tuesday, Dec 2, 2008." Each entry 814 can include a time stamp 808 for identifying when the entry 814 was sent, an author identifier 810 identifying who sent the entry, and a comment 812. For the first entry 814, Nat sent the comment "Hi Sweetie, when will you be home for dinner?" at 10:32pm. Herb responded at 10:32 pm, with Nat responding at 10:35 pm, Herb responding at 10:35. The comment field 816 allows a user, e.g., a member, to type in a comment that is provided to the other members of the group. For example, by hitting a carriage return at the end of the comment, the comment is provided to the other members of the group. The member does not have to enter who the recipients are nor does the member have to enter the subject. Since the item management application 259 links the items and comments to the group, the members do not have to enter the information.

Referring to Figure 9, a screenshot of a photo home screen in accordance with an exemplary embodiment is illustrated. As shown, the photo home or main screen 900 can display a group icon 902, a group name 904, a group applet 906, one or more photos 908a-d, a header 914, an add photo icon 916, and an existing photo icon 918. Each photo 908 can be a thumb nail photo 908 and can include a time stamp 910 and a member identifier 912. The group icon 902 can be an icon representing the group. The group name 904 can identify the group from other groups, e.g., family. The group applet 906 can identify the group applet that is being displayed, e.g., photos. The time stamp can include the date and time the photo was taken. As shown, the first photo 908a, was taken on Friday, October 17th at 4:28 pm. The member identifier 912 can identify the member who posted the photo 908 to the group. The member identifier 912 can be a name, a photo, another identifier identifying the member, or any combination thereof. The header 914 can provide a reference for the photos 908a-d, e.g., when they were uploaded -- "A few weeks ago." The add photo icon 916, when activated, can allow a member to take a new photo using the communication device 100 which can then be sent to the group. This feature is explained in more detail below. The select an existing photo icon 918, when activated, can allow a member of the group to select an existing photo and send the selected photo to the group. For example, if the member (or user of the communication device 100) stores or loads a photo onto the communication device 100 or accesses the photo via the communication device 100, the member can send the photo the group. This feature is explained in more detail below.

Referring to Figure 10, a screenshot of a photo viewer in accordance with an exemplary embodiment is illustrated. As shown, the photo viewer 1000 can include a photo 1002, a member identifier 1004, a caption 1006, a header 1008, a favorite area 1010, and thumbnails 1012 of one or more photos. The photo viewer 1000 can also include a timestamp (not shown) top identify the time the photo 1002 was taken. Similarly, a date stamp identifying the date the photo 1002 was taken can also be included or in place of a timestamp. The member identifier 1004 can identify the photographed or member who posted the photo 1002 to the group. The member identifier 1004 can be a name, a photo, another identifier identifying the member, or any combination thereof The caption 1006 can be text that a member of the group added to the photo 1002. The header 1008 can provide a reference for the photos 1002, e.g., "A few weeks ago." The favorite area 1010 can include one or more icons identifying if the photo 1002 has been tagged as a favorite by the member, if a voice comment is associated with the photo 1002, if comments are associated with the photo 1002, or any combination thereof. As shown, the member has tagged this photo 1002 as a favorite that is represented by the heart icon. A microphone icon can be used to identify an associated voice comment. A voice cloud icon can be used to identify one or more associated comments. Other icons can also be used to represent these features or other features. The thumbnail 1012 can be displayed allowing a user of the communication device 100 to scroll and choose other photos to be displayed in the photo viewer 1000. In one or more embodiments, the selected photo 1100 can be enlarged and displayed with or without the overlay displayed information as shown in Figure 11.

Referring to Figure 12, a screenshot of a calendar in accordance with an exemplary embodiment is illustrated. The calendar 1200 can include scheduled events, such as birthdays, meetings, parties, and sporting events, as well as holidays. As shown, the calendar 1200 can provide a list of scheduled events, e.g., lunch, read over texts, squash game, and a meeting. The calendar 1200 can be associated with a group, e.g., with a family group. As those skilled in the art will appreciate, the calendar 1200 can be similar to other known electronic calendars. For example, the calendar 1200 can be displayed in different time increments, e.g., yearly, monthly, daily, hourly, or in other know increments. When a member of the group associated with the calendar changes the calendar, e.g., adding an event (e.g., adding a birthday to the calendar), amending an event (e.g., changing the start time of an event), or deleting an event (e.g., removing a doctor appointment that was canceled), each member of the group can receive a new calendar event, receive a revised calendar event, receive a message identifying the changes, or any combination thereof. A calendar can be associated with each group that a member is associated with. In one or more embodiments, the calendars of two or more groups that a member is associated with can be merged into a single calendar. In such an embodiment, the scheduled events can be color coded to identify the group the scheduled event is associated with.

Referring to Figure 13, a screenshot of an address book in accordance with an exemplary embodiment is illustrated. The address book 1300 can include contact information for people or entities that can be associated with the group. As shown, the address book 1300 can include contact information for 911-emergency, dad, mom, neighbor's house, etc. The address book 1300 can be associated with a group, e.g., with a family group or a work group. For example, an address book 1300 for a family group can include contact information for family members, friends, doctors, dentist, babysitters, and neighbors. In another example, an address book for a work group can include contact information for workers, clients, potential clients, and the copy repair man. As those skilled in the art will appreciate, the address book 1300 can be similar to other know electronic address books. When a member of the group associated with the address book 1300 changes an entry in the address book 1300, e.g., adding a contact, amending an event (e.g., changing or supplementing a contact's contact information), or deleting a contact, each member of the group can receive a new address book, receive a message identifying the changes, or any combination thereof. An address book can be associated with each group that a member is associated with. In one or more embodiments, the address books of two or more groups that a member is associated with can be merged into a single address brook. In such an embodiment, the contacts can be color coded to identify the group the contact is associated with.

Referring to Figure 14, a flowchart of a method for managing an item and associated comments in accordance with an exemplary embodiment is illustrated. The exemplary method 1400 is provided by way of example, as there are a variety of ways to carry out the method. In one or more embodiments, the method 1400 is performed by the item management program 259. The method 1400 can be executed or otherwise performed by one or a combination of various systems. The method 1400 described below can be carried out using the communication devices 100 and communication network shown in Figures 1A, 1B, and 2 by way of example, and various elements of these figures are referenced in explaining exemplary method 1400. Each block shown in Figure 1400 represents one or more processes, methods or subroutines carried out in exemplary method 1400. The exemplary method 1400 can begin at block 1402.

At block 1402, the item management application is provided (e.g., installed and run) on a communication device. For example, the user of the communication device 100 can download the item management application 259 or the item management application 259 can already be installed on the communication device 100. Once the item management application 259 is installed, the item management application 259 can be run with the user or member creating one or more groups, joining one or more groups, or any combination thereof. After running the item management application 259 on the communication device 100, the method 1400 can proceed to block 1404.

At block 1404, a group can be selected. For example, using the navigation tool 127, the member can select an icon representing a group, e.g., family or work, and a group folder can be opened. After selecting the group, the method can proceed to block 1406.

At block 1406, an item can be provided to the group. For example, using the communication device 100, the member can send a photograph, a calendar, a list, a contact list, or start a conversation. In one embodiment, the member can take a photo and send the photo to the group. In another embodiment, the member can load a photo onto the communication device 100 and then send the photo to the group. Since the member is in the group applet or folder, the member does not have to identify the recipients of the item since the item is associated with the group and the system is already aware of whom the members of the group are. The member sending the message may enter a description of the item in the subject field and proceed to send the message. The item, the description in the subject field, the list of members (e.g., recipients) of the group, and an item identifier are packaged and sent to the network operation center, e.g., communication subsystem 211, which forwards the item to the specified members. In one or more embodiments, the item identifier is a unique identifier. The item identifier can comprise the type of item (e.g., photo, list, or calendar) and a time stamp of when the item was created which can be in milliseconds. The item identifier is used to link the item, comments, and the group. The item, description, and item identifier can be immediately received by the communication devices 100 associated with each specified member. Each communication device 100 receiving the item can de-package the item, description, and item identifier and identify which group the item is associated with and can provide a notification to the member that there is a new item for the identified group. After providing an item to the group, the method can proceed to block 1408.

At block 1408, comments can be provided to the group. For example, one or more members of the group can type in a comment to the photo with the comments being provided to the rest of the members of the group. Since, the item is associated with the group, the member does not have to identify the members of the group nor add a subject line. For example, the member can select the item, e.g., a photo, and in the comment field type a comment in the comment field and hit return, with the comment being sent to the rest of the group. For example, the comment is packaged together with the list of recipients and the item identifier. The package can be sent to the network operation center, e.g., communication subsystem 211, like the initial item package. The package is then forwarded to the communication devices 100 associated with each member (e.g., recipient) where the package is de-packaged and a notification can be provided to the member notifying the member that a comment associated with the identified group has been received by the communication device 100.

Referring to Figure 15A, a flowchart of a method for taking a photo and sending the photo to a group in accordance with an exemplary embodiment is illustrated. The exemplary method 1500 is provided by way of example, as there are a variety of ways to carry out the method. In one or more embodiments, the method 1500 is performed by the item management program 259. The method 1500 can be executed or otherwise performer by one or a combination of various systems. The method 1400 described below can be carried out using the communication devices 100 and communication network shown in Figures 1A, 1B, and 2 by way of example, and various elements of these figures are referenced in explaining exemplary method 1500. Each block shown in Figure 15A represents one or more processes, methods or subroutines carried out in exemplary method 1500. The exemplary method 1500 can begin at block 1502.

At block 1502, the "photos" applet is opened. For example, from a group home screen, e.g., the Patent Group shown in Figure 15B, the member, using the navigation tool 127 of the communication device 100, selects the "photos" applet by clicking on the "photos" icon, which causes a photo home screen, e.g., the photo home screen 900 shown in Figure 9, to be displayed. In one or more embodiments, the member can use a drop down menu to select a corresponding menu option. After opening the "photos" applet, the method 1500 can proceed to block 1504.

At block 1504, the "Post Photo with Camera" option is selected. For example, using the navigation tool 127 of the communication device 100, the member can select the "Post Photo with Camera" option, e.g., by clicking on the snap photo icon 914 shown in Figure 9. In one or more embodiments, the member can use a drop down menu to select a corresponding menu option. After selecting the "Post Photo with Camera" option, the method 1500 can proceed to block 1506.

At block 1506, the camera is activated to take a picture. For example, in response to the "Post Photo with Camera" selection, the communication device 100 can activate the camera to allow the member to take a picture. After activating the camera, the method 1500 can proceed to block 1508.

At block 1508, a picture is taken. For example, using the camera of the communication device 100, the member can take a picture, e.g., an electronic photo. In one or more embodiments, the member can be provided with an option to add a caption to the photo. For example, as shown in Figure 15C, the member is prompted to enter a caption, e.g., "Go Team!" For example, using the keyboard of the communication device 100, the member can type a caption that is associated with the photo. In one or more embodiments, a default caption can be associated with the photo. For example, the default caption can be a timestamp such as the date and time the photo was taken. After the member takes a picture, the method 1500 can proceed to block 1510.

At block 1510, the photo is posted to the group. For example, as shown in Figure 15C, using the navigation tool 127, the member can select a "send" option with the photo being sent to the communication devices associated with each member in the group, e.g., family group, via the network. For example, the communication device 100 associated with a first member, can send the photo to the rest of the members of the group where the photo and caption can be displayed on the communication devices 100 associated with the members of the group as shown in Figure 15D. After the picture is posted to the group, the method 1500 may proceed to block 1512.

At block 1512, the photo home screen is displayed. For example, the communication device 100 can display the photo home screen and allow the member to proceed from there. For example, the photo home screen 900 shown in Figure 900 can be displayed thereby allowing the member to proceed from there.

Referring to Figure 16, a flowchart of a method for sending a photo to a group in accordance with an exemplary embodiment is illustrated. The exemplary method 1600 is provided by way of example, as there are a variety of ways to carry out the method. In one or more embodiments, the method 1600 is performed by the item management program 259. The method 1600 can be executed or otherwise performed by one or a combination of various systems. The method 1600 described below can be carried out using the communication devices 100 and communication network shown in Figures 1A, 1B, and 2 by way of example, and various elements of these figures are referenced in explaining exemplary method 1600. Each block shown in Figure 16 represents one or more processes, methods or subroutines carried out in exemplary method 1600. The exemplary method 1600 may begin at block 1602.

At block 1602, the "photos" applet is opener. For example, from a group home screen, e.g., the Patent Group shown in Figure 15B, the member, using the navigation tool 127 of the communication device 100, selects the "Photos" applet by clicking on the "photos" icon, which causes a photo home screen, e.g., the photo home screen 900 shown in Figure 9, to be displayed. In one or more embodiments, the member can use a drop down menu to select a corresponding menu option. After opening the "photos" applet, the method 1600 can proceed to block 1604.

At block 1604, the "Post Photo from File" option is selected. For example, using the navigation tool 127, the member can select the "Post Photo from File" option, e.g., by clicking on the existing photo icon 916 shown in Figure 9. In one or more embodiments, the member can use a drop down menu to select a corresponding menu option. After selecting the "Post Photo from File" option, the method 1600 can proceed to block 1606.

At block 1606, a file manager is opened. For example, in response to the "Post Photo from File" selection, the communication device 100 can display one or more photos that the member can select to send to the group. As those skilled in the art will appreciate, the file manager can be similar and operate in a similar manner top know file managers. For example, thumbnails of photos can be displayed to allow the member to select a photo to send to the group. In another example, the member can import the photo from a source communicatively coupled to the communication device 100. After opening the file manager, the method 1600 can proceed to block 1608.

At block 1608, a photo is selected. For example, using the navigation tool 127 of the communication device 100, the member can select a photo, e.g., an electronic photo. In one or more embodiments, the member can be provided with an option to add a caption to the photo. For example, as shown in Figure 15C, the member is prompter to enter a caption, e.g., "go Team!" For example, using the keyboard of the communication device 100, the member can type a caption that is associated with the photo. In one or more embodiments, a default caption can be associated with the photo. For example, the default caption can be a timestamp such as the date and time the photo was taken. After the member takes a picture, the method 1600 can proceed to block 1610.

At block 1610, the photo is posted to the group. For example, as shown in Figure 15C, using the navigation tool 127, the member can select a "send" option with the photo being sent to the communication devices associated with each member in the group, e.g., family group, via the network. For example, the communication device 100 associated with a first member, can send the photo to the rest of the members of the group where the photo and caption can be displayed on the communication devices 100 associated with the members of the group as shown in Figure 15D. After the picture is posted to the group, the method 1600 may proceed to block 1612.

At block 1612, the photo home screen is displayed. For example, the communication device 100 can display photo home screen and allow the member to proceed from there. For example, the photo home screen 900 shown in Figure 900 can be displayed thereby allowing the member to proceed from there.

Referring to Figure 17A, a flowchart of a method for adding a comment associated with a photo and sending the comment to a group in accordance with an exemplary embodiment is illustrated. The exemplary method 1700 is provided by way of example, as there are a variety of ways to carry out the method. In one or more embodiments, the method 1700 is performed by the item management program 259. The method 1700 can be executed or otherwise performed by one or a combination of various systems. The method 1700 described below can be carried out using the communication devices 100 and communication network shown in Figures 1A, 1B, and 2 by way of example, and various elements of these figures are referenced in explaining exemplary method 1700. Each block shown in Figure 17A represents one or more processes, methods or subroutines carried out in exemplary method 1700. The exemplary method 1700 may begin at block 1702.

At block 1702, a photos is selected. For example, using the navigation tool 127, the member can view and select a photo. Using the navigation tool 127, the member can view the photos shown in the photo viewer 1000 shown in Figure 10 by scrolling the thumbnail photos 1012 and selecting a photo by clicking on the thumbnail photo 1012. After selecting a photo to comment on, the method 1700 can proceed to block 1704.

At block 1704, discuss picture option is selected. For example, using the navigation tool 127, the member can cause a menu list to be displayed as shown in Figure 17B and can select the "Discuss Picture" option. After selecting the discuss picture option from the menu list to be displayed, the method 1700 can proceed to block 1706.

At block 1706, a comment is entered. For example, as shown in Figure 17C, the member is prompted to enter a comment, e.g., "What a great looking bunch!" For example, using the keyboard of the communication device 100, the member can type a comment that is associated with the photo. After entering the comment, the method 1700 can proceed to block 1708.

At block 1708, the comment is posted to the group. By hitting the enter key on the keyboard of the communication device 100, the comment can be provided to the other members of the group. For example, the communication device 100 associated with a first member, can send the comment to the rest of the members of the group where the comment can be displayed on the communication devices 100 associated with the members of the group as shown in Figure 17D. Figure 17D shows only one comment, however, if there are other comments, they can also be displayed. Each comment can include a date stamp, a time stamp, the person who sent the comment and the comment.

Referring to Figure 18A, a flowchart of a method for adding a voice note to a photo in accordance with an exemplary embodiment is illustrated. The exemplary method 1800 is provided by way of example, as there are a variety of ways to carry out the method. In one or more embodiments, the method 1800 is performer by the item management program 259. The method 1800 can be executed or otherwise performed by one or a combination of various systems. The method 1800 described below can be carried out using the communication devices 100 and communication network shown in Figures 1A, 1B, and 2 by way of example, and various elements of these figures are referenced in explaining exemplary method 1800. Each block shown in Figure 18A represents one or more processes, methods or subroutines carried out in exemplary method 1800. The exemplary method 1800 may begin at block 1802.

At block 1802, a photo is selected to add to a voice note to the photo. For example, using the navigation tool 127, the member can view and select a photo. Using the navigation tool 127, the member can view the photos shown in the photo viewer 1000 shown in Figure 10 by scrolling the thumbnail photos 1012 and selecting a photo by clicking on the thumbnail photo 1012. After selecting a photo to comment on, the method 1800 can proceed to block 1804.

At block 1804, "Add Voice Note" option is selected. For example, using the navigation tool 127, the member can cause a menu list to be displayed as shown in Figure 18B and can select the "Add Voice Vote" option. After selecting the add voice note option from the menu list to be displayed, the method 1800 can proceed to block 1806.

At block 1806, the "Record" option is selected. For example, using the navigation tool 127, the member can select the "Record" option from the display shown in Figure 18C. The display can be displayed in response to the member selecting the "Add Voice Note." The display can include the photo, a scrollbar showing the length of the voice message, a time punter showing the length of the recorded voice message, a record button or icon and a cancel button or icon. After selecting the "Record" option, the method 1800 can proceed to block 1808.

At block 1806, a voice note is recorded. For example, the member speaks into the microphone 236 of the communication device 100 and records a voice note or voice message. By clicking on the "Record" option, the recording can stop. After recording the voice note, the method 1800 can proceed to block 1808.

At block 1808, the voice note is played. For example, using the navigation tool 127, the member can select the "Play" option and listen to the recorded voice note over the speaker 234 of the communication device 100. Block 1808 is optional in that the member does not have to listen to the voice note. After listening to the voice note, the method 1800 can proceed to block 1810.

At block 1810, the recorded voice note is canceled. For example, using the navigation tool 127, the member can select the "Cancel" option and cancel the voice note. After canceling a voice note, the method can proceed to block 1804 to record a new voice note. For example, after canceling the voice note, the member can select the "Record" option from the display shown in Figure 18C. If the member chooses to select the "Cancel" option shown in Figure 18C, the method 1800 can end.

At block 1812, the voice note can be attached. For example, using the navigation tool 127, the member can select the "Attach" option from the display shown in 18D to have the voice note attached to the photo and be posted to the other members. After selecting to attach the voice note, the method 1800 can proceed to block 1814.

At block 1814, the recorded voice note is posted to the goup. By hitting the "attach" option, the recorded voice note is provided to the other members of the group. For example, the communication device 100 associated with a first member, can send the photo and voice note to the rest of the members of the group where the comment can be displayed on the communication devices 100 associated with the members of the group as shown in Figure 18E. As shown, the photo can include the caption "Go Team!," an icon showing that the photo includes a voice note and a discussion icon.

Referring to Figure 19A, a flowchart of a method for adding a photo to a favorite list in accordance with an exemplary embodiment is illustrated. The exemplary method 1900 is provided by way of example, as there are a variety of ways to carry out the method. In one or more embodiments, the method 1900 is performed by the item management program 259. The method 1900 can be executed or otherwise performed by one or a combination of various systems. The method 1900 described below can be carried out using the communication devices 100 and communication network shown in Figures 1A, 1B, and 2 by way of example, and various elements of these figures are referenced in explaining exemplary method 1900. Each block shown in Figure 19A, represents one or more processes, methods or subroutines carried out in exemplary method 1900. The exemplary method 1900 may begin at block 1902.

At block 1902, a photo is selected to add as a favorite. For example, using the navigation tool 127, the member can view and select a photo. Using the navigation tool 127, the member can view the photos shown in the photo viewer 1000 shown in Figure 10 by scrolling the thumbnail photos 1012 and selecting a photo by clicking on the thumbnail photo 1012. After selecting a photo to add as a favorite, the method 1900 can proceed to block 1904.

At block 1904, "Tag As Favorite" option is selected. For example, using the navigation tool 127, the member can cause a menu list to be displayed as shown in Figure 19B and can select the "Tag As Favorite" option. After selecting the tag as favorite option from the menu list to be displayed, the method 1900 can proceed to block 1906. After causing the menu list to be displayed, the method 1900 can proceed to block 1906.

At block 1906, the photo is marked as a favorite. For example, an icon, such as a star, is associated with the photo. After the photo is marked as a favorite, method 1900 can proceed to block 1908.

At block 1908, a comment is posted to the group. For example, a comment is posted to the other members or the group informing them that a member marked the photo as a favorite. Since the member selected the photo and since the members of the group are associated with the photo, the comment regarding the marking the photo as a favorite is provided to the communication devices 100 associated with member of the group.

Referring to Figure 20A, a flowchart of a method for editing a caption to a photo in accordance with an exemplary embodiment is illustrated. The exemplary method 2000 is provided by way of example, as there are a variety of ways to carry out the method. In one or more embodiment, the method 2000 is performed by the item management program 259. The method 2000 can be executed or otherwise performed by one or a combination of various systems. The method 2000 described below can be carried out using the communication devices 100 and communication network shown in Figures 1A, 1B, and 2 by way of example, and various elements of these figures are referenced in explaining exemplary method 2000. Each block shown in Figure 20A represents one or more processes, methods or subroutines carried out in exemplary method 2000. The exemplary method 2000 may begin at block 2002.

At block 2002, a photo is selected to edit the associated caption. For example, using the navigation tool 127, the member can view and select a photo. Using the navigation tool 127, the member can view the photos shown in the photo viewer 1000 shown in Figure 10 by scrolling the thumbnail photos 1012 and selecting a photo by clicking on the thumbnail photo 1012. After selecting a photo to edit the caption, the method 2000 can proceed to block 2004.

At block 2004, "Edit Caption" option is selected. For example, using the navigation tool 127, the member can cause a menu list to be displayed as shown in Figure 20B and can select the "Edit Caption" option. After selecting the edit caption option from the menu list to be displayed, the method 2000 can proceed to block 2006.

At block 2006, caption is edited. For example, using the keyboard 132, the member can edit or type a new caption as shown in Figure 20C. After editing the caption, the method 2000 can proceed to block 2008.

At block 2008, the photo with the revised caption is posted to the groups. For example, using the navigation tool 127, the member can select a send option to have the photo and revised caption provided top the group, In another embodiment, by hitting the enter key on the keyboard of the communication device 100, the photo and revised caption can be provided to the group. Since the member selected the photo and since the members of the group are associated with the photo, the photo and revised caption are provided to the communication devices 100 associated with member of the group.

Referring to Figure 21A, a flowchart of a method for deleting prior comments in accordance with an exemplary embodiment is illustrated. The exemplary method 2100 is provided by way of example, as there are a variety of ways to carry out the method. In one or more embodiments, the method 2100 is performed by the item management program 259. The method 2100 can be executed or otherwise performed by one or a combination of various systems. The method 2100 described below can be carried out using the communication devices 100 and communication network shown in Figures 1A, 1B, and 2 by way of example, and various elements of these figures are referenced in explaining exemplary method 2100. Each block shown in Figure 21A represents one or more processes, methods or subroutines carried out in exemplary method 2100. The exemplary method 2100 may begin at block 2102.

At block 2102, a photo is selected to delete prior comments. For example, using the navigation tool 127, the member can view and select a photo. Using the navigation tool 127, the member can view the photos shown in the photo viewer 1000 shown in Figure 10 by scrolling the thumbnail photos 1012 and selecting a photo by clicking on the thumbnail photo 1012. After selecting a photo to edit the caption, the method 2100 can proceed to block 2104.

At block 2104, a comment is selected. For example, using the navigation tool 127, the member can select a comment. After selecting a comment, the method 2100 can proceed to block 2106.

At block 2106, "Delete Prior" option is selected. For example, using the navigation tool 127, the member can cause a menu list to be displayed as shown in Figure 21B and can select the "Delete Prior" option. After selecting the delete prior option from the menu list to be displayed, the method 2100 can proceed to block 2108.

At block 2108, the comments prior to the selected comment are deleted. For example, comments prior to the selected comment are deleted and are no longer associated with the photo. Thus, if someone accesses the photo, the deleted comments are not displayed.

Referring to Figure 22A, a flowchart of a method for deleting a photo in accordance with an exemplary embodiment is illustrated. The exemplary method 2200 is provided by way of example, as there are a variety of ways to carry out the method. In one or more embodiments, the method 2200 is performed by the item management program 259. The method 2200 can be executed or otherwise performed by one or a combination of various systems. The method 2200 described below can be carried out using the communication devices 100 and communication network shown in Figures 1A, 1B, and 2 by way of example, and various elements of these figures are referenced in explaining exemplary method 2200. Each block shown in Figure 22A represents one or more processes, methods or subroutines carried out in exemplary method 2200. The exemplary method 2200 may begin at block 2202.

At block 2202, a photo is selected for deletion. For example, using the navigation tool 127, the member can view and select a photos. Using the navigation tool 127, the member can view the photos shown in the photo viewer 1000 shown in Figure 10 by scrolling the thumbnail photos 1012 and selecting a photo by clicking on the thumbnail photo 1012. After selecting a photo to delete, the method 2200 can proceed to block 2204.

At block 2204, "delete Photo" option is selected. For example, using the navigation tool 127, the member can cause a menu list to be displayed as shown in Figure 22B and can select the "Delete Photo" option. After selecting the delete prior option from the menu list to be displayed, the method 2200 can proceed to block 2106.

At block 2206, the deletion is confirmed. For example, the member can be prompted to confirm the deletion. Using the navigation tool 127, the member can reject the deletion and the method 2200 can proceed to the group home screen. After confirming the deletion of the photo, the method 2200 can proceed to block 2208.

At block 2208, the photo is deleted. For example, the member can no longer access the photo and the photo is not displayed in the photo viewer 1000.

Referring to Figure 23A, a flowchart of a method for archiving an item or conversation associated with an item in accordance with an exemplary embodiment is illustrated. The exemplary method 2300 is provided by way of example, as there are a variety of ways to carry out the method. In one or more embodiments, the method 2300 is performed by the item management program 259. The method 2300 can be executed or otherwise performed by one or a combination of various systems. The method 2300 described below can be carried out using the communication devices 100 and communication network shown in Figures 1A, 1B, and 2 by way of example, and various elements of these figures are referenced in explaining exemplary method 2300. Each block shown in Figure 23A represents one or more processes, methods or subroutines carried out in exemplary method 2300. The exemplary method 2300 may begin at block 2302.

At block 2302, a "Send to" option is selected. For example, using the navigation tool 127, the member can cause a menu list to be displayed as shown in Figures 18B or Figure 23B. For example, if a member would like to send a photo or picture, the member can select the "Send Picture To" option from the menu as shown in Figure 18B. In another example, if a member would like to send a conversation, the member can select the "Send Conversation To" option from the menu as shown in Figure 23B. Using the "Send To" option, the member can archive or store the item, e.g., photo, conversation, contacts, list, voice message, or the like. After selecting the send to option from the menu list to be displayed, the method 2300 can proceed to block 2304.

At block 2304, a means to send the item is selected. For example, once the "Send To" option is selected, another menu can be displayed as shown in Figure 23C. Using the navigation tool 127, the member can "select" an option from the menu to send the item (e.g., photo, conversation, contacts, list, voice message, or the like) to someone. For example, the member can elect to send the item to an email address associated with that member to store the item. As shown, the member can send the item by email, group message, messenger contact, MMS, PIN or SMS. After selecting the means from the menu list to be displayed, the method 2300 can proceed to block 2306.

At block 2306, the contact information can be entered or selected. For example, the member can be prompted to enter contact information (e.g., an email, address or PIN), can select contact information from a menu as known in the art, or any combination thereof. After entering or selecting the contact information, the method 2300 can proceed to block 2308.

At block 2308, the item is sent. For example, the communication device 100 can send the item (e.g., photo, conversation, contacts, list, voice message, or the like) to each communication device 100 associated with the entered or selected contact information.

Referring to Figures 24A - 24F, a series of screenshots 2400 for the overview applet in accordance with an exemplary embodiment are illustrated. Figure 24A shows an exemplary screenshot for the group applet. As shown, the user is a member of two groups: the "IP Group" having one other member and the "Test Group" having one other member. Using the navigation tool 127, the user can select a group, e.g., the Test Group. Figure 24B shows an exemplary screenshot of a main or home screen for the Test Group. Figure 24C shows an exemplary screenshot of the overview applet being highlighted. For example, using the navigation tool 127, the user can place the pointer over the overview applet or can select the overview applet. Figure 24D shows an exemplary screenshot after the overview applet is selected, e.g., the home screen for the Group Activity applet. The overview applet 506a can allow a user to compose a message, record a voice note, review messages, or any combination thereof. The home screen can display different threads, such as message threads, picture threads, and voice note threads. As shown, there is a picture thread, e.g., the "I'm TIM HAWKES" thread, and one message thread under the "Lisa" thread. The icon, e.g., a red star, associated with the Lisa thread indicates that a new message has been posted in the thread. The user can draft a message by selecting the message compose icon, record a new voice note by selecting the record icon, or open a displayed thread by selecting the thread. Figure 24E shows an exemplary screenshot of the "record a new voice note" applet being highlighted. For example, using the navigation tool 127, the user can place the pointer over the record a new voice note applet or can select the record a new voice applet. Figure 24F shows an exemplary screenshot of a selected thread. For example, using the navigation tool 127, the user selected the "I'm TIM HAWKES" thread. This thread includes a photograph entitled "Cottage" which is discussed below in another series of screenshots.

Referring to Figures 25A - 25I, a series of screenshots 2500 associated with a photograph in accordance with an exemplary embodiment is illustrated. Figure 25A shows an exemplary photograph, e.g., the cottage photograph from the "Picture added: "cottage"" thread displayed in Figure 24F. Initially, the picture can be displayed with an overlay of one or more photographs as shown in Figure 25B. Figures 10 and 26G show a picture having an overlay of multiple photographs. After a set period of time, the overlay can disappear from the display. As shown in Figures 25A and 25B, the picture is entitled "Cottage" and has a comment "About an hour ago." As shown in Figure 25C, the member can cause a menu to be displayed, e.g., the member can cause a menu list to be displayed. As shown, the "Discuss Picture" option is highlighted. Figure 25D shows an exemplary screenshot prompting the member to enter a comment which can be associated with the photograph, e.g., the cottage photograph. In the comment box, the member enters the comment "Nice Picture. Where was it taken?" The comment can be sent to the members of the group, e.g., by hitting the return key on the device. Figure 25E shows an exemplary screenshot displaying the posted comment. Figure 25F shows an exemplary screenshot of the thread with a new comment: "Nice Picture. Where was it taken?" added. As shown, Lisa entered the last comment and an icon, e.g., the dialogue cloud, shows that she added a new comment. Figure 25G shows the cottage photograph and includes the icon, e.g., the dialogue cloud, providing an indication that a comment was added to the photograph. As shown, the displayed photograph and the overlay each include the dialogue cloud icon. Figure 25H shows the overview home screen having the photograph thread which includes the icon, e.g., dialogue cloud, indicating that a comment was added to the photograph thread. Figure 25I shows the photograph thread including the comments. As shows, the member "I'm TIM HAWKES" responded to Lisa's question/comment and answered that the photograph was taken at "Port Sydney - right by Huntsville."

Referring to Figures 26A - 26N, a series of screenshots 2600 for reviewing photographs is illustrated. Figure 26A shows the home screen of the communication device 100 with an icon, e.g., a red star, indicating a new alert, e.g., a comment or message, in a group, e.g., the Test Group. Figure 26B shows an exemplary screenshot of the group applets. As shown, the user of the communication device is a member of the IP Group and the Test Group with the Test Group having an icon, a red star, indicating a new alert in that group. Using the navigation tool 127, the member can select the Test Group. Figure 26C shows an exemplary home screen for the Test Group with an icon, e.g., a red star, indicating that there is new activity in the group photograph section. Figure 26D shows an exemplary screenshot of the photo applet being highlighted. For example, using the navigation tool 127, the user can place the pointer over the photo applet or can select the photo applet. Figure 26E shows the home screen for the photo applet. As shown, there are three recent photographs posted with the top photograph including an icon, e.g., dialogue cloud, indicating that a new comment was added. Figure 26F shows the home screen for the photo applet after scrolling down the screen. The user can select any of the photographs, with the "cottage" and the "Yesterday was sweet!" photographs having icons indicating that new comments are associated with each of these photographs. Figure 26G shows the selected Cottage photograph with an overlay of multiple photographs. After a set period of time, the overlay can disappear from the display. Figure 26H shows the Cottage photograph without the overlay. Figure 26I shows the selected photograph captioned "Yesterday was sweet!" with an overlay of multiple photographs. Figure 26J shows the selected photograph captioned "Yesterday was sweet!" without the overlay. In Figures 26G and 26I the overlays include icons indicating which photos have new comments associated with the photos. Figure 26K shows an exemplary home screen for the Test Group with the overview applet being highlighted. Using the navigation tool 127, the member can select the overview applet. Figure 26L shows the messages associated with the overview applet. As shown, there are three threads with the top thread having an indicator with an asterisk and a dialogue cloud indicating a new comment for the photo thread by "T'm TIM HAWKES" with the comment being "Ghosts? Aawweessoommeece." In the present example, the unread comment is shown in bold. Figure 26M shows the comments associates with the selected thread, e.g., the top thread. For example, using the navigation tool 127, the member can select the thread. Figure 26N shows the photographs associated with the thread. For example, using the navigation tool 127, the member can select the "Open Picture" icon shown in Figure 26M.

In the preceding specification, various preferred embodiments have been described with reference to the accompanying drawings. It will, however, be evident that various modifications and changes may be made thereto, and additional embodiments may be implemented, without departing from the broader scope of the invention as set forth in the claims that follow. The specification and drawings are accordingly to be regarded in an illustrative rather than restrictive sense.

## Claims

1. A communication device comprising:
a display screen configured to display one or more items;
a microprocessor communicatively coupled to the display screen; and
an item management application configured to manage the one or more items and one or more comments associated with each of the one or more items;
wherein the microprocessor is configured to control operation of the item management application;
wherein the item management application is configured to
provide an item within a peer-to-peer, serverless network to one or more additional communication devices, wherein each communication device is associated with a group and wherein a particular item is shared among the communication devices associated with the group;
wherein the item management application is further configured to provide the one or more comments, relating to a particular item, within the peer-to-peer, serverless network to the communication devices due to the group being associated with the item.

2. The communication device of claim 1 wherein the particular item is one of a list, a picture, a conversation, a calendar, or an address book.

3. The communication device of claim 1 wherein the item management application is configured to provide the one or more items and associated one or more comments to each communication device associated with the group in near real time.

4. The communication device or claim 3 wherein the item management application is configured to provide the one or more items and associated one or more comments by sending one or more push messages.

5. The communication device of claim 1 wherein the communication device is one of a smart phone, a personal digital assistant, a laptop, or a computer.

6. The communication device of claim 1 wherein the associated comment comprises a voice message.

7. A method comprising;
providing an item management application on a communication device;
receiving a selection of a group displayed on the communication device, wherein the group comprises at least two members;
providing an item within a peer-to-peer, serverless network to one or more additional communication devices, wherein each of the one or more additional communication devices is associated with the group and wherein the group is associated with the item; and
providing one or more comments, relating to the item, within the peer-to-peer, serverless network top each of the additional communication devices due to the group being associated with the item.

8. The method of claim 7 wherein the item is one of a list, a picture, a conversation, a calendar, or an address book.

9. The method of claim 7 wherein providing the item within the peer-to-peer, serverless network to communication devices is provided in near real time using one or more push messages.

10. The method of claim 9 wherein providing one or more comments over the network top communication devices is provided in near real time using one or more push messages.

11. The method of claim 7 wherein the communication device is one of a smart phone, a personal digital assistant, a laptop, or a computer.

12. The method of claim 7 wherein the associated comment comprises a voice message.

13. A processor-readable medium having an item management application configured for managing one or more items and one or more comments for a communication device, the item management application causing the communication device to:
providing the item management application on a communication device;
receiving a selection of a group displayed on the communication device, wherein the group comprises at least two members;
providing an item within a peer-to-peer, serverless network top one or more additional communication devices, wherein each of the one or more additional communication devices is associated with the group and wherein the group is associated with the item; and
providing one or more comments, relating to the item, within the peer-to-peer, serverless network to each of the additional communication devices due to the group being associated with the item.

14. The processor-readable medium of claim 13 wherein the communication device is one of a smart phone, a personal digital assistant, a laptop, or a computer.

15. The processor-readable medium of claim 13 wherein the associated comment comprises a voice message.
